(19) **Europäisches Patentamt**

**European Patent Office**

**Office européen des brevets**

(11) **EP 1 666 418 A1**

(12) **EUROPEAN PATENT APPLICATION**
published in accordance with Art. 158(3) EPC

(43) Date of publication:
07.06.2006 Bulletin 2006/23

(51) Int Cl.:
*C01G 15/00* (1968.09)    *C01G 19/00* (1968.09)
*H01B 5/14* (1968.09)    *H01B 13/00* (1968.09)

(21) Application number: 04772664.1

(22) Date of filing: 26.08.2004

(86) International application number:
**PCT/JP2004/012710**

(87) International publication number:
**WO 2005/021436 (10.03.2005 Gazette 2005/10)**

(84) Designated Contracting States:
**DE DK**

(30) Priority: **29.08.2003 JP 2003306014**

(71) Applicant: **Japan Science and Technology Agency
Kawaguchi-shi,
Saitama 332-0012 (JP)**

(72) Inventor: **FUJITA, Y.,
c/o Tokyo Metropolitan College ofTech
Tokyo 140-0011 (JP)**

(74) Representative: **Kramer - Barske - Schmidtchen
Radeckestrasse 43
81245 München (DE)**

(54) **ITO THIN FILM AND METHOD FOR PRODUCING SAME**

(57)    A novel thin ITO film formed on a substrate and containing Sn at a concentration of 0.6 to 2.8 atomic %. The thin ITO film can be used as a transparent electrically conducting film. A method of producing the thin ITO film includes a step of spraying a mixed solution of an indium salt and a tin salt onto a substrate left in the atmosphere. A stannous chloride is used as the tin salt and an alcohol solution is used as the solution. The thin ITO film of a low Sn concentration (0.6, 1.3 or 2.8 atomic %) exhibits a markedly decreased absorption coefficient in a long wavelength region ($\lambda \fallingdotseq$ 500 to 1000 nm). The thin ITO film realizes a low resistivity (about 1.7 x $10^{-4}$ $\Omega \cdot$cm).

*FIG. 16*

**Description**

BACKGROUND OF THE INVENTION

Field of the Invention

The present invention relates to thin ITO films. The invention further relates to a method of producing the thin ITO films.

Description of the Related Art

Transparent conducting films are clear to visible light(wavelengths of 380 to 780 nm) exhibiting high electric conductivities (volume resistivities of $1 \times 10^{-3}$ $\Omega$ ·cm or smaller). Among them, a representative thin ITO (indium tin oxide, $In_2O_3$:Sn) film has been used as a principal electronic material for liquid crystal displays (LCDs), solar cells and touch panels, and for preventing the fogging of windowpanes such as of refrigerators, automobiles and aircraft. By utilizing its infrared-ray shielding effect, further, the thin ITO film has also been applied to window glasses (low-E windows) of buildings and films for selectively transmitting light, as well as to plane heat generation, prevention of static electricity and electrostatic/electromagnetic shielding by utilizing its high electric conductivity.

Accompanying the progress in the information communication technology in recent years, a technical demand given us is to develop a liquid crystal full-color display of high cost-performance featuring a quick response and a large area. This demand has urged the production of a thin ITO film of high performance exhibiting high transmittance of light/low resistivity over the visible region up to the near infrared region (wavelengths of about 380 to 1000 nm, hereinafter referred to as a long wavelength region). To realize this, it is essential (1) to decrease absorption coefficients in the long wavelength region, and (2) to decrease the electron scattering effect which causes an increase in the resistivity, arising from the lattice defects (neutral ions, oxygen deficits, crystal grain boundary, dislocation, etc.) existing in the thin ITO film.

The past study of light absorption properties of the thin ITO films in the long wavelength region is found in only the report related to those formed by the DC sputtering method carried out by the present inventors (Y. Fujita and K. Kitakizaki, J. Korean Inst. Surface Eng. 29(1996)660.), and other researchers were concerned with the argument of transmittance and reflectance of ITO films from the ultraviolet region to the visible region (wavelengths of about 250 to 780 nm, hereinafter referred to as a short wavelength egion). Furthermore, most of the past studies were Performed for thin ITO films with Sn concentration higher than 4 at.% (deposited onto a substrate heated at above 400°C) by using the DC sputtering. It is noted that electrical and optical properties have not been investigated so far for thin ITO films with lower Sn concentrations below about 4 at.%.

The thin ITO films have heretofore been produced relying chiefly upon the DC sputtering method which is a physical vapor deposition (PVD) method. On the other hand, the spray method and the dip-coating method which are chemical vapor deposition (CVD) methods have been studied much less than by the PVD method. The CVD method is known to be difficult to control the properties such as film thickness, volume resistivity and transmittance as compared to the case of PVD method. Accordingly, the CVD method has been limited to some uses only.

The spray method is also called a spray pyrolysis method or a spray CVD method. According to this method, a solution obtained by diluting a chloride ($InCl_3$, $SnCl_2$, $SnCl_4$, etc.) which is a starting material of the thin ITO film with a solvent such as an alcohol, is sprayed onto a heated substrate (glass or the like) by using a sprayer to form the thin ITO film.

The spray method was not so far thoroughly studied. Through the inventive idea and contrivance and being assisted by the established method of clarifying and controlling the physical properties, however, it can be greatly expected to produce a thin ITO film of high performance and large area embodying advantages that are described below.

(a) The industrial production apparatus based on the spray method is simple (low facility cost of about 30 million yen) as compared to the DC sputtering apparatus (100 to 200 million yen), and is capable of mass-producing the thin ITO films of large areas in the atmosphere.

(b) The thin ITO film produced by the spray method has a purity higher than that of the DC sputtered film, and is very advantageous for the production of a thin ITO film having a low Sn concentration.

The reason is because the spray solution can be prepared from a highly pure chemical without any processing making it possible to form a thin ITO film of good quality containing little impurities. According to the DC sputtering method, a target material which is a base material of the thin ITO film is prepared by heat-sintering an indium oxide and a tin oxide powder. Through the step of heat-sintering, impurities (Fe, Cu, C, etc.) infiltrate into the target; i.e., the target that is prepared has a low purity from which the thin ITO film of high performance cannot be obtained.

Among all physical quantities, in general, the electric conductivity of a matter is most susceptible to the presence of lattice defects such as impurities. For example, addition of a trace amount of impurities (0.1 atomic % or less) to a pure metal results in a great increase in the resistivity.

A prior art closest to the present invention may be a report related to a thin ITO film formed by the spray method by Sawada et al. (Y. Sawada, C. Kobayashi, S. Seki and H. Funakubo, Thin Solid Films 409(2002) 46.). According to this report, a mixed solution is prepared by diluting indium chloride ($InCl_3$) and stannous chloride ($SnCl_2$) with ethanol, and is sprayed onto a glass substrate heated at 350°C on a hot plate by using an inexpensive sprayer (made of a plastic material) to form a thin ITO film containing Sn at a concentration of 3.8 to 11 atomic %.

However, a thin ITO film containing Sn at a low concentration of smaller than 3.8 atomic % has not been formed. From the measurement, there are obtained a transmittance of 85% in the visible region and a minimum resistivity of 1.9 x $10^{-4}$ Ω·cm relative to the film that is formed but without heat-treated (thickness of 215 nm, Sn of 5.8 atomic %). These data are not at all inferior to the transmittance and the resistivity possessed by the practical thin ITO films formed by the DC sputtering method.

Described below are another three reports related to the thin ITO films formed at a substrate temperature of about 500°C by using mixed solutions obtained by adding stannic chloride ($SnCl_4$) which is different from the one used by Sawada et al. to the indium chloride ($InCl_3$) relying upon the conventional spray method.

Nagatomo and Ohki have formed thin ITO films of a thickness of 140 nm by using solutions containing $SnCl_4$ at concentrations of 0, 2, 5, 10 and 15% by weight to obtain transmittances of 85 to 90% for light of a wavelength of 500 nm, and have obtained a resistivity of 2 x $10^{-4}$ Ω · cm with an $SnCl_4$ concentration of 2% by weight (T. Nagatomo, O. Ohki, Applied Physics 47(1978) 618). However, the reaction apparatus that is used is of a closed system with a complex mechanism. Besides, the reaction is carried out requiring a high temperature.

Further, Kostlin et al. (H. Kostlin, R. Jost and W. Lems, Phys. Stat. Sol.(a) 29 (1975) 87.) and Manifacier et al. (J. C. Manifacier, L. Szepessy, J. F. Bresse, M. Perotin and R. Stuck, Mat. Res. Bull. 14 (1979) 163.) have examined the crystal structures of the thin ITO films, lattice constants, carrier concentrations and light transmittance/reflectance. The former group has obtained transmittances of 80 to 85% in the visible region with the thin ITO films containing 6 atomic % of Sn and 8 atomic % of Sn. The latter group has obtained transmittances of 85 to 90% with the thin ITO films having sheet resistances of not smaller than 10 Ω/□. The latter group has further shown absorption coefficients of the thin ITO films containing Sn at concentrations of 0.7, 2.3 and 4 atomic % in the light wavelength region of 275 to 354 nm (ultraviolet region) but did not analyzed the step of absorbing light.

As described above, to meet the technical demand for producing thin ITO films of high performance exhibiting a high light transmittance and a low resistivity in the long wavelength region (380 to 1000 nm), there remain the following problems stemming from the lattice defects (neutral ions, oxygen deficits, crystal grain boundary, dislocation, etc.) existing in the thin ITO films.

    (a) How to decrease the light absorption effect in the long wavelength region.
    (b) How to decrease the electron scattering effect which causes an increase in the resistivity.

However, these problems stem from the properties inherent in the oxide semiconductor (thin ITO film) to which no researcher has yet paid attention.

    [1] Y. Fujita and K. Kitakizaki, J. Korean Inst. Surface Eng. 29 (1996) 660.
    [2] Y. Sawada, C. Kobayashi, S. Seki, and H. Funakubo, Thin Solid Films 409 (2002) 46.
    [3] T. Nagatomo, O. Ohki, Applied Physics 47 (1978) 618.
    [4] H. Kostlin, R. Jost, and W. Lems, Phys. Stat. Sol. (a) 29 (1975) 87.
    [5] J. C. Manifacier, L. Szepessy, J. F. Bresse, M. Perotin and R. Stuck, Mat. Res. Bull. 14 (1979) 163.
    [6] G. Lucovsky, Solid State Commun. 3 (1965) 299.
    [7] Hirabayashi, Izumi, Solid Physics 20 (1985) 255.
    [8] M. Yamaguchi, Y. Fujita and K. Morigaki, J. Non-Cryst. Solids 114 (1989) 283.

SUMMARY OF THE INVENTION

The present invention was accomplished in view of the above problems and has an object of providing novel thin ITO films.

The present invention has another object of providing a method of producing the novel thin ITO films.

A thin ITO film of the invention is formed on a substrate, has an Sn concentration of 0.6 to 2.8 atomic %, and exhibits an absorption coefficient $\alpha$ of not larger than 2.0 x $10^3$ cm$^{-1}$ for the monochromatic light of a wavelength of 800 nm.

A method of producing a thin ITO film of the present invention comprises a step of heating a substrate left in the atmosphere and spraying a mixed solution of an indium salt and a tin salt onto the substrate, wherein the Sn concentration in the thin ITO film is 0.6 to 2.8 atomic %.

The present invention exhibits the effects as described below.

The present invention provides a novel and thin ITO film formed on a substrate having an Sn concentration of 0.6 to 2.8 atomic % and exhibiting an absorption coefficient $\alpha$ of not larger than $2.0 \times 10^3$ cm$^{-1}$ for the monochromatic light of a wavelength of 800 nm.

The present invention provides a method of producing a novel and thin ITO film comprising a step of heating a substrate left in the atmosphere and spraying a mixed solution of an indium salt and a tin salt onto the substrate, wherein the Sn concentration in the thin ITO film is 0.6 to 2.8 atomic %.

BRIEF DESCRIPTION OF THE DRAWINGS

Fig. 1 is a diagram illustrating a transparent quartz substrate of a Hall element;

Fig. 2 is a diagram schematically illustrating how to measure the Hall effect and the resistivity;

Fig. 3 is a diagram illustrating a transition step of optical absorption;

Fig. 4 is a diagram schematically illustrating an optical absorption spectrum;

Fig. 5 is a diagram illustrating a relationship between the Sn concentration in a spray solution and the Sn concentration (analytical value) in a thin ITO film;

Fig. 6 is a diagram illustrating a relationship between the Sn concentration in the thin ITO film and the thickness thereof;

Fig. 7 is a diagram illustrating the results of X-ray diffraction of the thin ITO film with the Sn concentration in the thin film as a parameter;

Fig. 8 is a diagram illustrating a relationship between the Sn concentration in the thin ITO film and the lattice constant thereof;

Fig. 9 is a diagram illustrating a relationship between the Sn concentration in the thin ITO film and the crystal particle size thereof in the direction of thickness of the film;

Fig. 10 is a diagram illustrating a relationship between the Sn concentration in the thin ITO film and the lattice distortion thereof;

Fig. 11 is a diagram illustrating a relationship between the Sn concentration in the thin ITO film and the carrier concentration n therein;

Fig. 12 is a diagram illustrating a relationship between the Sn concentration in the thin ITO film and the resistivity P calculated from the formula (2);

Fig. 13 is a diagram illustrating a relationship between the Sn concentration in the thin ITO film and the Hall mobility $\mu_H$ therein;

Fig. 14 is a diagram illustrating the measured results of the transmittances T and the reflectances R of the thin ITO films (Sn = 0, 0.6, 4.1 atomic %) relative to the wavelength $\lambda$ (nm) of the scanning monochromatic light of a spectrophotometer;

Fig. 15 is a diagram showing the measured results of absorption spectra of the thin ITO film samples of low Sn concentrations (0, 0.6, 1.3, 2.8 atomic %);

Fig. 16 is a diagram showing the measured results of absorption spectra of the thin ITO film samples of high Sn concentrations (4.1, 8.3, 10.0, 14.6 atomic %);

Fig. 17 is a diagram of when an absorption coefficient $\alpha$ for a wavelength $\lambda$ (photon energy h$\nu$) shown by the measured results of absorption spectrum is substituted for the formula (8), and the calculated result $(\alpha h\nu)^2$ is shown relative to the wavelength $\lambda$ (photon energy h$\nu$);

Fig. 18 is a diagram of when an absorption coefficient $\alpha$ for a wavelength $\lambda$ (photon energy h$\nu$) shown by the measured results of absorption spectrum is substituted for the formula (8), and the calculated result $(ah\nu)^2$ is shown relative to the wavelength $\lambda$ (photon energy h$\nu$);

Fig. 19 is a diagram of when an absorption coefficient $\alpha$ for a wavelength $\lambda$ (photon energy h$\nu$) shown by the measured results of absorption spectrum is substituted for the formula (8), and the calculated result $(\alpha h\nu)^{1/2}$ is shown relative to the wavelength $\lambda$ (photon energy h$\nu$);

Fig. 20 is a diagram of when an absorption coefficient $\alpha$ for a wavelength $\lambda$ (photon energy h$\nu$) shown by the measured results of absorption spectrum is substituted for the formula (8), and the calculated result $(\alpha h\nu)^{1/2}$ is shown relative to the wavelength $\lambda$ (photon energy h$\nu$);

Fig. 21 is a graph illustrating a shift of an absorption end toward a short wavelength region due to the Burstein-Moss effect in an easy-to-understand manner;

Fig. 22 is a diagram plotting the band gaps Eg for the Sn concentration in the thin ITO film and the values of Urbach energy Eu representing disturbance of state density at the bottom of the conduction band;

Fig. 23 is a graph of the Lucovsky plot using the formula (9);

Fig. 24 is a graph of the Lucovsky plot using the formula (9) ;

Fig. 25 is a diagram illustrating a band model; and

Fig. 26 is a diagram schematically illustrating the crystal structure of a thin ITO film of a low Sn concentration.

DESCRIPTION OF THE PREFERRED EMBODIMENTS

Preferred embodiments of the invention will now be described.

Described below, first, is a method of producing a thin ITO film relying upon the spray method.

Relying upon the spray method in this embodiment, a thin ITO film of a low Sn concentration containing Sn at a concentration of not higher than 4 atomic % is formed by using a mixed solution of $InCl_3$, $SnCl_2$ and ethanol. For comparison with the results of prior study, further, thin ITO films containing Sn at concentrations as high as 4 to 14.6 atomic % are formed and are measured and analyzed for their properties.

As the spray solution in this embodiment, an indium chloride ($InCl_3 \cdot 3.5H_2O$, purity of 99.99% manufactured by Wako Junyaku Co.) and a tin chloride ($SnCl_2 \cdot 2H_2O$, purity of 99.9% manufactured by Wako Junyaku Co.) are dissolved and diluted in ethanol (purity of 99.5%, manufactured by Wako Junyaku Co.), and the mixture is stirred with a magnetic rotor for 20 to 40 hours to prepare a spray solution. There are prepared mixed solutions containing metal ions at a total concentration of 0.1 mol/l and tin (Sn) at concentrations of 0, 1, 2, 3, 4, 5, 7, 10 and 15 atomic %. Here, the Sn concentration (atomic %) is a ratio of the numbers of atoms of Sn/(In + Sn).

In this embodiment, the thin ITO film is formed at room temperature in the atmosphere by repetitively spraying, by using a perfume atomizer, about 20 ml of a solution onto a substrate heated at 350°C being placed on a hot plate (area of 14 x 14 $cm^2$) 300 times to deposit a thin ITO film of a thickness of about 250 to 350 nm. Here, the substrate is left in the atmosphere.

There can be used a variety of substrates. The material of the substrate will be a metal, a semiconductor, ceramics or heat-resistant high molecules.

It is desired that the substrate is heated at a temperature in a range of 100 to 630°C. When the temperature of the substrate is not lower than 100°C, the thermal motion/chemical reaction of the molecules of the thin film material become vigorous with the rise in the substrate temperature, the growth of film/crystallization are accelerated and, as a result, a thin polycrystalline ITO film having good crystallinity is formed. When the substrate temperature is not higher than 630°C, there is obtained an advantage of forming a novel and thin ITO film having a mixed phase of an amorphous phase and a fine crystalline phase that could not be found so far and of forming a thin amorphous ITO film.

As the method of heating the substrate, there can be employed a heating method which uses a hot plate. The method of heating the substrate is not limited to the heating method that uses the hot plate. The method of producing the thin ITO film of the invention may further employ a method of heating the substrate by using an infrared-ray lamp that has already been employed for the production of thin semiconductor films by the CVD method. Further, when a metal material or a ceramic material which permits the flow of electricity but has a large electric resistance is used as the substrate, it is allowed to flow an electric current into the substrate of these materials to maintain the substrate itself at a high temperature by utilizing the Joule heat though this may not have been put into a practical use yet. This is called current-flowing substrate-heating method. By employing the above current-flowing substrate-heating method, there is a possibility that the thin ITO film can be formed on the substrate of the above material relying upon the spray method.

The solution to be sprayed onto the substrate is a mixed solution of an indium salt and a tin salt.

As the indium salt, there can be used an indium dichloride ($InCl_2$) though this may need the study for possibility.

As the tin salt, there can be used a stannous chloride, a stannic chloride ($SnCl_4$), or a di-n-butyltin dichloride (($n$-$C_4H_9)_2SnCl_2$) or a dimethyltin dichloride ($SnCl_2 (CH_3)_2$), etc. though they may need the study for possibility.

As the solvent, there can be used an ethyl alcohol, a methyl alcohol or a mixed solution of these alcohols and water, or pure water (deionized water). The reason for selecting these solvents is to reliably prevent the occurrence of fire and to maintain safety when the total concentration of metal ions is further decreased in the solution or when the spray method is carried out on an industrial scale.

It is desired that the total concentration of metal ions in the solution lies in a range of 0.05 to 0.4 mols/l. When the total concentration of metal ions is not smaller than 0.05 mols/l, there is obtained an advantage in that the thin ITO film can be formed at an increased rate with an increase in the total concentration of ions. When the total concentration of metal ions is not larger than 0.4 mols/l, there can be formed a very thin ITO film. The very thin ITO film offers an advantage of opening the door for the application to microelectronic device materials that have not been existing so far.

A perfume atomizer can be used as a device for spraying the solution. The device for spraying the solution is not limited to the perfume atomizer. There can be also used a sprayer (by slightly modifying it) for applying a color paint that is used for coating automobiles.

It is desired that the distance between the sprayer and the substrate is in a range of 10 to 70 cm. When the distance is not smaller than 10 cm, there is obtained an advantage in that a thin ITO film can be formed on a very small substrate of a size of smaller than several millimeters. When the distance is not larger than 70 cm, there is obtained an advantage in that a thin ITO film can be formed having a uniform thickness and a large area.

The solution is intermittently sprayed onto the substrate. That is, the spraying is intermittently effected like spray, rest, spray, rest.

It is desired that the spraying time is in a range of 0.5 to 2.0 seconds each time. When the spraying time is not shorter than 0.5 seconds, there is obtained an advantage in that the number of times of spraying the solution can be decreased with an increase in the spraying time for forming a thin ITO film having a desired thickness. When the spraying time is not longer than 2.0 seconds, the spraying amount of each time can be decreased with a decrease in the spraying time. As a result, the material molecules in the solution deposit in decreased amounts on the substrate offering an advantage of decreasing a drop of temperature of the substrate caused by the absorption of heat by the material molecules from the substrate.

It is desired that the rest time is in a range of 3 to 10 seconds. When the rest time is not shorter than 3 seconds, there is obtained an advantage in that a predetermined substrate temperature is reliably resumed with an increase in the rest time from a state where the substrate temperature is lowered due to the spray of solution onto the substrate. When the rest time is not longer than 10 seconds, fine dust floating near the substrate surface is less trapped by the thin film with a decrease in the rest time and, hence, there is formed a highly pure thin ITO film.

It is desired that the total number of times of spraying is in a range of 50 to 400 times. When the total number of times of spraying is not smaller than 50 times, the thickness of the thin ITO film formed on the substrate increases with an increase in the number of times of spraying offering an advantage in that the crystallites easily grow in the direction of film thickness and, as a result, a polycrystalline and thin ITO film is reliably formed having good crystallinity. When the total number of times of spraying is not larger than 400 times, there is obtained an advantage in that there can be formed a thin ITO film of a mixed phase in which an amorphous phase and a fine crystal phase are mixed together, that was not formed so far, or a thin amorphous ITO film can be formed.

The thin ITO film formed on the substrate can be annealed. The annealing improves the crystallinity of the thin ITO film offering an advantage in that the electric properties and the optical properties thereof are improved as compared to those of the state as deposited without annealing.

It is desired that the annealing temperature is in a range of 250 to 800°C. When the annealing temperature is not lower than 250°C, there is obtained an advantage in that the annealing effect is reliably obtained in a short period of annealing time. When the annealing temperature is not higher than 800°C, there is obtained an advantage in that undesired impurities are suppressed from entering into the thin ITO film from the surfaces of the heating device.

In the foregoing was employed the spray method for forming the thin ITO film on the substrate. However, the method of forming the thin ITO film on the substrate is not limited to the spray method. There can be further employed a dip-coating method by using the mixed solution used by the spray method, or a sol-gel method which is slightly modified.

Next, described below are the thin ITO films formed by the above-mentioned method.

The Sn concentration in the thin ITO film desirably lies in a range of 0.6 to 2.8 atomic %. The reason will be described later in detail.

The thickness of the thin ITO film desirably lies in a range of 60 to 400 nm. When the film thickness is not smaller than 60 nm, the growth of film/crystallization are favorably conducted offering such an advantage that a polycrystalline and thin ITO film having an increased thickness is formed featuring good crystallinity and excellent optical properties and electric properties as in this embodiment. When the film thickness is not larger than 400 nm, fine working can be easily carried out offering such an advantage that very thin ITO films can be supplied to the field of micro-engineering and to the field of microelectronics.

The thin ITO film can be used as a transparent conducting film, a low-E window, for preventing the fogging of window glasses of refrigerators, automobiles and aircraft, and as a coating for heat-generating surfaces, for antistatic surfaces and for electromagnetic shielding.

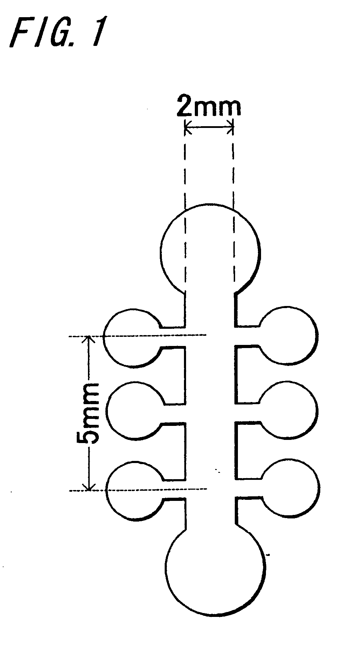

For measuring optical characteristics, the substrate is made of a highly pure molten quartz plate (0.4 x 17 x 60 mm$^3$, manufactured by Koshi Kogaku Kogyo Co.) which is transparent for visible rays through up to near infrared rays and of which the surface is polished. To obtain a sample for measurement, further, the back surface of the quartz substrate after the film has been formed thereon is cut into about 17 x 17 mm$^2$ by using a diamond cutter. To measure the Hall effect and the resistivity maintaining high precision, the substrate for measuring electric properties is obtained by cutting the molten quartz plate into a Hall element of a shape and size shown in Fig. 1 by using an ultrasonic cutter. The surfaces of the Hall element substrate and of the quartz substrate for optical measurement are maintained clean by being polished by using a neutral detergent and a breaching cloth followed by ultrasonic washing with an alcohol and with an acetone for 20 minutes each. Thereafter, the surfaces are quickly dried with the clean and hot air, and the two substrates are readily arranged on the hot plate, maintained at a substrate temperature of 350°C, and a thin ITO film is simultaneously deposited thereon. The substrate temperatures are measured maintaining a precision of ±4% by pushing a chromel/Alumel thermocouple of a diameter of 0.2 mmϕ onto the surfaces of the substrates.

For taking measurement in this embodiment, there are prepared thin ITO film samples having low Sn concentrations in a slightly large number, i.e., in a number of 70 for measuring optical properties and thin ITO film samples in a number of 50 for measuring electric properties. The reproduceable data are obtained from the measurement of all of these properties. The thin ITO film samples are all determined for their thicknesses and Sn concentrations based on the thin film FP determination method (fundamental parameter method) by using an energy dispersion type fluorescent X-ray device (JSX-3200 manufactured by Nihon Denshi Co.). In this embodiment, further, the crystalline structures of the thin ITO film samples are evaluated by using an X-ray diffraction apparatus for thin film (JDX-8030 manufactured by Nihon Denshi Co.) by the Cu(kα) irradiation, at an angle of incidence of 2 degrees and a wavelength step width of 0.02 degrees. The crystal structures are evaluated on the basis of a powdery $In_2O_3$ standard sample.

Next, described below is an experimental researching method of the embodiment for measuring physical properties in order of measuring electric properties and measuring optical properties. Described below first is a method of measuring electric properties.

In general, a thin ITO film sample is evaluated for its electric properties based on physical quantities such as the resistivity ρ (also called specific resistance) expressing the easiness of electric conduction, conductive carrier concentration in the sample, electron concentration n in the case of a thin ITO film and electron mobility μ expressing the easiness of motion of electrons like those of the metals/semiconductor crystals or thin films thereof. In practice, the electron mobility μ, in many cases, uses the Hall mobility $\mu_H$ found from the experiment of the Hall effect in an electric field (in a low magnetic field of not higher than 5T at room temperature, there approximately holds $\mu \fallingdotseq \mu_H$). If numerical values of the thin ITO film (substrate temperature of about 400°C) formed by the DC sputtering method that is placed in practical use are exemplified, $\rho = 1.5 \times 10^{-4}$ (Ω·cm), $n = 1.2 \times 10^{21}$ (cm$^{-3}$), $\mu = 40$ (cm$^2$/(V/sec)) (and light transmittance T = 85%). The data of a low Sn concentration thin ITO film based on the spray method of the invention are not at all inferior to the above data.

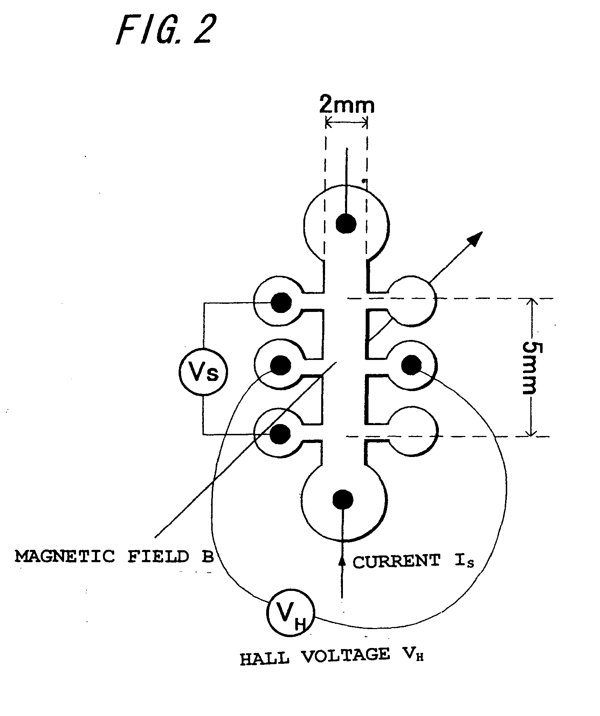

Described below are the above method of measuring electric properties and a method of analyzing the physical quantities according to the embodiment. In this embodiment, an electric resistance R is found at room temperature from the measurement of a voltage and a current of a sample relying on the four-terminal method, and a Hall coefficient $R_H$ is found from an experiment of the Hall effect. Described below with reference to Fig. 2 is an analytical method of determining the resistivity ρ, electron concentration n, and Hall mobility $\mu_H = R_H/\rho$ from the measured results. As shown, a thin ITO film (sectional area S = thickness δ x width d (m$^2$)) formed on the Hall element substrate is set in a transparent quartz tube (inner diameter of 50 mm, length of 1 m) which can be evacuated and into which a gas can be introduced, and is installed at the center between Hall pieces (diameter of 150 mm φ, a gap of 75 mm) of an electromagnet. Next, a DC constant current Is (A) is allowed to flow into the sample and a voltage drop Vs (V) across the terminals of the sample of a length L (m) is measured by using a digital voltmeter. This is called a resistance measurement by the four-terminal method, and a highly precise resistance measurement is realized.

Next, in this embodiment, a DC exciting current flows into the electromagnet in a state where the sample current Is (A) is flowing to generate a magnetic field (correctly, a magnetic flux density B (Wb/m$^2$) = B(T) tesla) between the Hall pieces, and a measurement is taken up to a maximum of B = 1(T) with the accompanying Hall voltage $V_H$ as a function of the magnetic flux density B. Here, use is made of a vibrating-reed electrometer having a very large input impedance (10$^8$ Ω or higher) so that the Hall voltage $V_H$ will not adversely affect the measurement. In order to reliably measure the Hall coefficient maintaining a high precision, further, a relationship is measured between the Hall voltage $V_H$ and the magnetic field density B by turning the direction of the sample current Is and the direction of the magnetic field B forward and reverse in a total of four ways, and the Hall coefficient $R_H$ is calculated from the average values thereof.

From these measurements, first, there are found an electric resistance R, a resistivity ρ and a Hall coefficient $R_H$ from the following formulas,

$$R = \frac{V_S}{I_S} = \rho \frac{L}{S} \ (\Omega) \qquad\qquad (1)$$

$$\rho = R \frac{S}{L} \ (\Omega m) \qquad\qquad (2)$$

$$R_H = V_H \frac{\delta}{I_S B} \ (m^3/C) \qquad\qquad (3)$$

According to the electromagnetics, the resistivity defined as an inverse number of the electric conductivity σ is given by P = (1/σ) = (1/enμ), where e = 1. 6 x $10^{-9}$ (C: coulomb) is an absolute value of the electric charge of an electron. Further, according to the Drude-Lorentz' classic electron theory of solid physics, if the velocity of an electron accelerated in an electric field E is denoted by V, then, the electron mobility μ in a metal is expressed by μ = vE = e τ /m, where τ is called relaxation time which is defined to be a time (average time) in which an electron is allowed to freely move from a collision until a next collision when it is considered that the electron moves undergoing a repetitive collision with the base material atoms and with other electrons while it is being accelerated in the electric field. In the quantum mechanics which incorporates a wave image, the phenomenon of collision due to a particle image is called an electron scattering phenomenon in which the relaxation time is related to a transition probability among the electronic states of an electronic wave function.

According to a free electron model in solid physics, on the other hand, a number of conductive electrons (about $10^{21}$ to $10^{22}$ cm$^{-3}$) in a metal are regarded to be the degenerated free electrons that comply with the Fermi statistics. By solving the equation of motion in an electromagnetic field with which the degenerated free electrons comply, the Hall coefficient $R_H$ is given by the following formula,

$$R_H = -(1/en) \qquad\qquad (4)$$

This formula can be applied even in the case of a thin ITO film having many conductive electrons ($10^{19}$ to $10^{21}$ cm$^{-3}$) resembling those of metals. In the case of an N-type semiconductor having many electrons, the formula (4) of a free electron model is usually applied to analyze the experimental data. With a P-type semiconductor having many positive holes, however, the sign of the formula (4) becomes positive. From the formula (4), if the Hall coefficient $R_H$ can be obtained from the experiment of Hall effect, the electron density n (m$^{-3}$) can be readily found from $1/eR_H$. Usually, however, a unit cm$^{-3}$ (= $10^6$ m$^{-3}$) is used. From the next formula, further, it will be learned that the above Hall mobility $\mu_H$ is found from $R_H/\rho$,

$$\mu_H = R_H/\rho = (1/en)(en\mu) \qquad (5)$$

As described above, physical quantities that characterize electric properties of the thin ITO film in this embodiment are all found from the measurement of electric resistance and from the measurement of the Hall coefficient. Relative errors in n and P are determined depending upon the precision of measurement (not larger than ± 10%, the same holds even in the past studies) of the thickness δ of the thin ITO film, and other electric measurements are as highly precise as ±0.5% or smaller. In the past many studies on thin ITO films, the resistivity P is found by a less precise method of pushing four probes of a voltage and a current onto the surface of the thin film, the precision being affected by the surface effect of the thin film, and the Hall coefficient $R_H$ is measured by the Van der Pauw method by using a square thin film sample which is less precise than the experiment of the Hall effect by using the Hall element of this embodiment. Measurement of the resistivity ρ by the four-terminal method and measurement of the Hall coefficient $R_H$ using the Hall element conducted by this embodiment are commonly used means which have proved to be successful in the traditional study of physical properties of metals and semiconductors, and are the experimental methods which are at present most reliable in studying properties of the thin ITO films.

Next, described below is a method of measuring optical properties according to the embodiment.

In general, optical properties of the thin ITO films are evaluated based on the measurement of physical quantities such as a transmittance T(%), a reflectance R(%), an absorptivity A(%) and the like for the wavelength λ (nm) of monochromatic light falling on a sample like in the case of metals, semiconductor crystals and thin films thereof. In the thin ITO film formed by the DC sputtering method put into practical use, T is about 80 to about 90(%) and R is about 5 to about 18(%) in the visible region (wavelengths of 380 to 780 nm). The absorptivity A has not so far been closely studied but is about 2 to about 8(%) in the visible region. In this embodiment, attention is given to the absorptivity (absorption coefficient related thereto) that was not so far seriously considered, and a thin ITO film of a low Sn concentration is invented realizing a decreased absorptivity in order to meet the technical demand for producing a thin ITO film of high performance in the long wavelength region (380 to 1000 nm).

Usually, the physical quantities T, R and A are measured by using a double-beam spectrophotometer in a manner as described below. The transmittance T of the thin ITO film is measured relative to the standard sample (thin film substrate such as of glass or transparent quartz) and the reflectance R is measured as a function of the scanning (monochromatic light) wavelength relative to the reflectance of aluminum. The following relationship holds among these measured values.

$$A + R + T = 1 \qquad (6)$$

Usually, to consider absorption properties of a sample from a viewpoint of microscopic physical properties, there are used a band structure based on the perturbation theory of quantum mechanics, electronic state, effective mass of carrier, and absorption coefficient $\alpha$ (cm$^{-1}$) related to transition step of optical absorption described in the transition probability of electrons. Here, the absorption coefficient $\alpha$ is defined as a proportional constant based on an assumption that the amount of light absorbed by the matter varies in proportion to the depth the light permeates, and is found from the measured values T and R in compliance with the following formula,

$$T = \frac{(1-R)^2 \exp(-\alpha x)}{1-R^2 \exp(-2\alpha x)} \approx (1-R)^2 \exp(-\alpha x) \qquad (7)$$

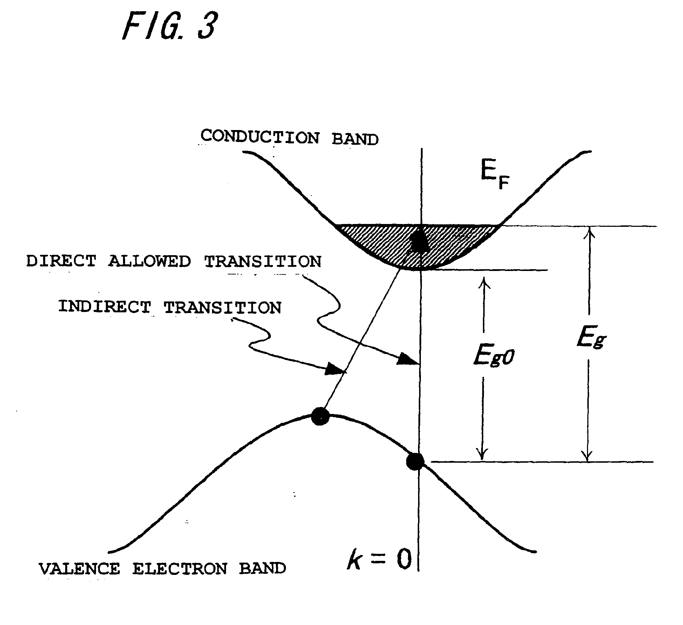

In this embodiment, the thin ITO film samples (Sn concentrations: 0, 0.6, 1.3, 2.8, 4.1, 8.3, 10.0, 14.6 atomic %) are measured for their transmittances T and reflectances R at wavelengths $\lambda$ over a range of 400 to 3000 nm by using a spectrophotometer (UV-3100 manufactured by Shimazu Co.), and the results are substituted for the formula (7) and a relationship of the absorption coefficient $\alpha$ (cm$^{-1}$) to $\lambda$ (nm) is shown as a graph. This graph is called absorption spectrum. Light is usually treated as particles (photons) having energy h $\nu$ (h: Planck's constant) in addition to properties of electromagnetic waves having a velocity C, a frequency $\nu$ and a wavelength $\lambda$ (= C/ $\nu$). In a graph of absorption spectra, the abscissa in many cases represents the energy h $\nu$ (eV) of photons by using a relationship h$\nu$ (eV) - 1.24/$\lambda$ ($\mu$m) instead of representing the wavelength $\lambda$. The absorption phenomenon of indium oxide (In$_2$O$_3$) will now be described by using a diagram of energy bands of Fig. 3 wherein the abscissa represents a wave number k of an electron of when the momentum of an electron is expressed as

$$p = \hbar k$$

and the ordinate represents the energy of an electron, i.e.,

$$E = (\hbar k)^2 / 2m$$

(m is a mass of an electron).

In general, as shown in Fig. 3, the phenomenon of optical absorption is considered to be a transition step (also called inter-band transition) in which an electron in a valence electron band is acquiring the energy of a photon and is being transited into a vacant state density (vacant seat for accepting an electron) in a conduction band positioned in a high energy state. The transition step includes a direct allowed transition step at the bottom (k = 0) of the conduction band and an indirect transition step from the top of the valence electron band to the bottom of the conduction band. The width of energy between the bottom of the conduction band and the top of the valence electron band is called an optical band gap (EgO). The optical band gap is an important physical quantity that dominates optical properties reflecting the electronic structure of a metal or a semiconductor. The direct allowed transition step has been reported much concerning the indium oxide (In$_2$O$_3$) and the ITO (In$_2$O$_3$:Sn) containing Sn atoms. In the ITO as shown in Fig. 3, electrons formed by the Sn atoms fill the bottom of the conduction band; i.e., electrons undergo the transition into a higher vacant energy level. Here, the highest energy level packed with electrons is called Fermi level and this state is regarded to be degenerated. Therefore, the thin ITO film is also called a degenerated semiconductor. As a result, the band gap apparently becomes greater than Ego which has not been degenerated, i.e., becomes Eg. The spread of the band gap shifts the light absorption end toward the higher energy side. This is called the Burstein-Moss effect.

In this embodiment, the absorption coefficient $\alpha$ found from the measurement is analyzed by using the following formula in order to examine the band gap that dominates the optical properties and to examine the absorption transition step,

$$(\alpha h\nu)^{1/n} = B(h\nu - E_g) \qquad (8)$$

where B is a constant related to a transition probability, n is an index characterizing the transition step, n = 2 is an indirect transition step, and n = 1/2 is a direct allowed transition step.

In practice, the abscissa (equal graduate) of a one-sided logarithmic graph represents $h\nu$, $(\alpha h\nu)^2$ and $(\alpha h\nu)^{1/2}$ are plotted along the ordinate, and a transition step is determined from the n-values at where the data points are in good agreement with a straight line. A band gap $h\nu = E_g$ is found from a point where the straight line is extrapolated to the abscissa having a zero value of ordinate. The above linear portion that gives the band gap $E_g$ also gives an absorption end in the inter-band transition.

Next, described below is a method of analyzing absorption characteristics in a long wavelength region which makes a feature in this embodiment based on the Lucovsky model ({6, 7}).

From the above technical demand, it has been urged to produce a thin ITO film of high performance having a high transmittance (and a low resistivity) in the long wavelength region (wavelength $\lambda$ = 380 to 1000 nm) of from the visible region to the near infrared region. To meet this demand in this embodiment, the light absorption characteristics of the thin ITO film in the long wavelength region are analyzed and the control method thereof is established as described below by the analytical method which is based on the Lucovsky model.

So far, the study of absorption coefficients of thin ITO films in the long wavelength region has only been confined in the report related to the thin ITO films formed relying upon the DC sputtering method carried out by the present inventor ({1}), but has not been quite extended to the thin ITO films formed relying upon the spray method. Namely, the conventional study and technology have simply confirmed that the transmittances have been confined in a range of T = 85 to 90% where the practical use is not hindered, but no further close study has been pursued.

First, described below are features of the transmittance T, reflectance R and absorptivity A of a typical thin ITO film (electron concentration n of about $5 \times 10^{20}$ cm$^{-3}$) formed by the well-known DC sputtering method. In the visible region ($\lambda$ = 380 to 780 nm), the transmittance T assumes a value of 80 to 90%, which monotonously decreases with an increase in the wavelength starting from about $\lambda$ = 900 nm, and becomes T = 10% or smaller at 1800 nm and approaches zero at 2000 nm. The reflectance R is confined to be about 5 to 13% at $\lambda$ = 380 to 1200 nm, sharply increases from about 1400 nm, and becomes R = 90% or greater in an infrared ray region of not smaller than 2000 nm to reflect light. The reflection is presumably related to the plasma oscillation of conductive electrons in the thin ITO film. On the other hand, the absorptivity A gradually rises from about $\lambda$ = 550 nm (A = 1 to 2%), reaches A = 9% at 800 nm, becomes a maximum A = about 50% at 1600 nm and, thereafter, monotonously decreases with an increase in the wavelength $\lambda$ and becomes A = 10% or smaller at 2500 nm. The above behavior of absorptivity A is presumably attributed to the absorption by the conductive electrons but has not yet been generally comprehended.

According to the embodiment (described later) of the present invention, however, it was discovered from the analysis of the light absorption coefficient based on the Lucovsky model that the light absorption phenomenon of the thin ITO film formed by the spray method in the long wavelength region ($\lambda$ = 500 to 1000 nm) stems from the lattice defects in the band gap but does not stem from the absorption by the conductive electrons undergoing plasma oscillation. The analysis of absorption coefficient based on the Lucovsky model has already succeeded in the analysis of absorption by the In acceptors in the crystalline silicon ({6}), in the analysis of absorption phenomenon that accompanies Au impurity atoms added to amorphous silicon or that accompanies lattice defects such as asymmetrical electrons ({8}), and in the analysis of light absorption phenomenon related to oxygen deficit (lattice defect) in the long wavelength region of the thin ITO film formed by the DC sputtering carried out by the present inventor ({1}) .

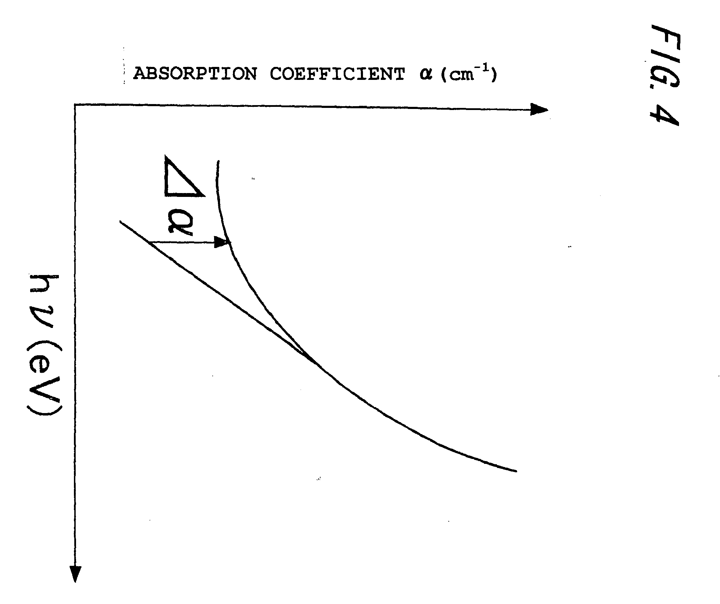

The analytical method based on the Lucovsky model will now be described on the basis of a typical absorption spectrum of a thin ITO film shown in Fig. 4 ({1, 6, 7, 8}). In Fig. 4, the absorption coefficient $\alpha$ in a region of a low photon energy ($h\nu$), i.e., in a long wavelength region, is deviated upward in which the value increases by $\Delta\alpha$ from the linear portion of $\alpha$ (corresponds to the absorption end of inter-band transition) in the region of a high photon energy. The transition matrix element in the optical absorption sectional area is not dependent upon the energy, and $\Delta\alpha$ is given by the following formula from the analysis of electron transition probability with the electron trapping level stemming from the lattice defect in the band gap and the band (conduction band/valence electron band) as being of the delta function type and the parabolic type ({6}),

$$(\Delta\alpha)^{1/f} (h\nu)^{3/f} = B(h\nu - E_t) \qquad (9)$$

where B is a constant characterizing the transition.

$E_t$ is called threshold energy and represents an energy level (hereinafter called localized level) present in the band gap accompanying the lattice defect, and plays an important role in the present invention. An index f can assume any value out of f = 0, 1, 1/2 or 3/2 as shown in Table 1. Upon finding a value f which holds the relationship of the formula (9), an absorption transition step is closely determined via the localized level.

If the absorption transition step is described in detail, there exist two transition steps, simultaneously, i.e., a step in which electrons in the valence electron band acquires photon energy as a result of absorbing light and are transited to a localized level of a high energy state and a step in which electrons on the localized level acquire photon energy and are transited to a conduction band of a higher energy state. Otherwise, there exists only one of the above steps. The localized level (entity is the above-mentioned lattice defect) which characterizes the transition step is called the trapping center (according to the experiment as will be described later, it was found that the oxygen deficit in the thin ITO film behaves as a trapping center, and there exist two transition steps simultaneously).

Table 1: f-Values

| Trapping center | Band state density | | | |
|---|---|---|---|---|
| | Parabolic type | | Linear type | |
| Electric charge | 1 | 0 | 3/2 | 1/2 |
| Neutral | 3/2 | 1/2 | 2 | 1 |
| Transition step | prohibited | allowed | prohibited | Allowed |

In this embodiment, values $\Delta \alpha$ are found for the values $h \nu$ from the experimental data of the absorption spectrum ($\alpha$) of Fig. 4 and are substituted for the formula (9). The results are plotted, i.e., $(\Delta \alpha)^{-1/f} (h \nu)^{3/f}$ are plotted along the ordinate relative to the abscissa $h \nu$ to prepare a graph. In this graph, if a plotted point of a given f-value is in agreement with a straight line, it means that the absorption properties are complying with the Lucovsky model ({6}), and a value $h\nu$ at a point where the straight line is extraporated onto the abscissa gives Et. Here, by taking an f-value that gives the straight line and Table 1 into consideration, there can be determined the type (parabolic type, linear type) of the charged state of the trapping center and of the state density (vacant seat capable of accepting quantum mechanical electrons) of a band (conduction band) to where the trapping centers and electrons will be transited relative to the wave numbers of electrons.

In the embodiment of the present invention, it was discovered relying upon the above analytical method that the absorption properties of the thin ITO film of a low Sn concentration in the long wavelength region are not due to the absorption by the conductive electrons undergoing plasma oscillation which was so far speculated but are due to a light absorption phenomenon in which the above-mentioned two transition steps are existing simultaneously via a localized level (trapping center) accompanying the oxygen deficit in the band gap (which will be described later) . This discovery stems from a pioneer study that has analyzed the light absorption phenomenon in the long wavelength region of a thin ITO film formed by the spray method, and this method of study plays an important role in the production of thin ITO films of low Sn concentrations.

A thin ITO film was produced in accordance with the above embodiment and was measured for its physical properties. Described below are the measured results.

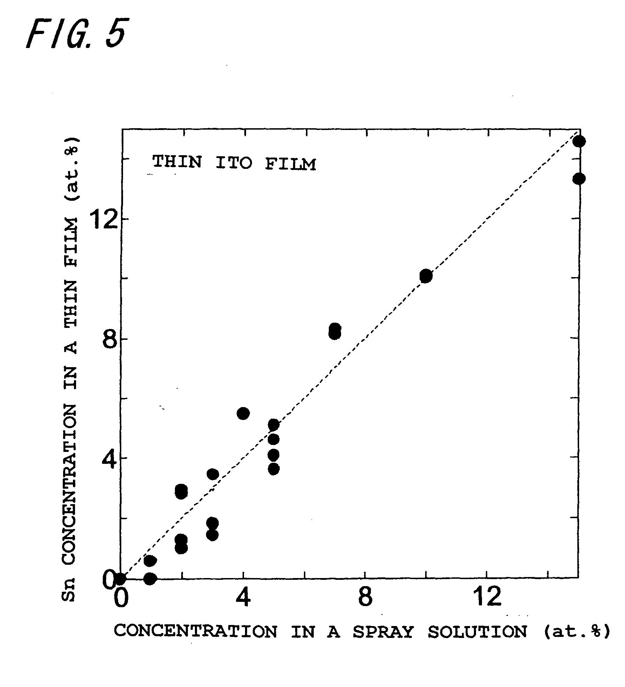

Fig. 5 is a diagram illustrating a relationship between the Sn concentration in a spray solution and the Sn concentration (analytical value) in a thin ITO film. A nearly proportional relationship is maintained up to a high concentration representing validity of the method of producing thin ITO films by the spray method of the embodiment of the present invention.

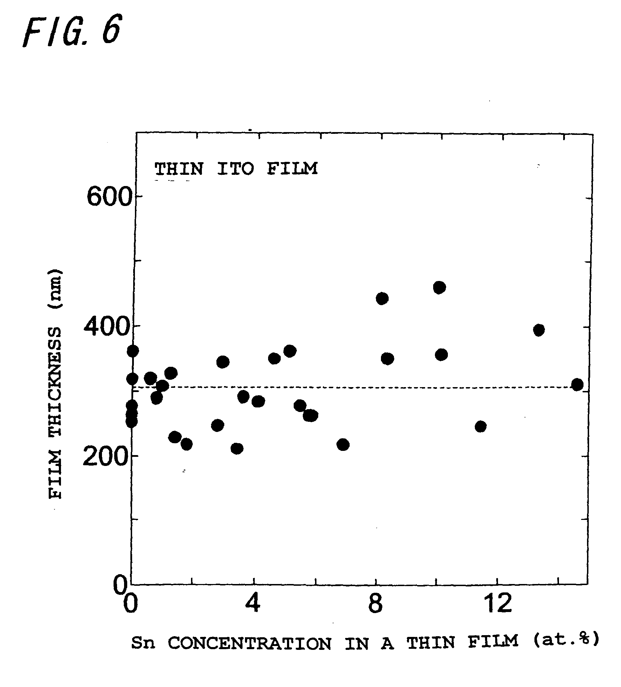

Fig. 6 is a diagram illustrating a relationship between the Sn concentration in the thin ITO film and the thickness thereof. The film thickness fluctuates on the side of a high Sn concentration exhibiting, however, a tendency that can be regarded to be nearly constant.

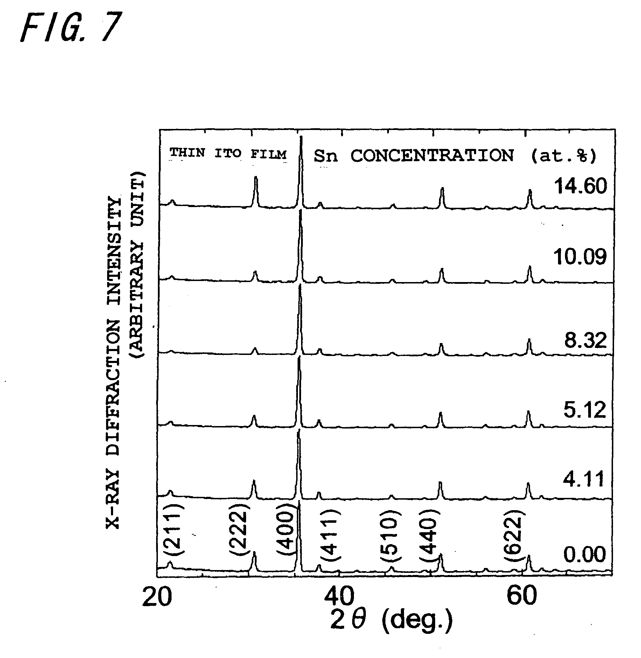

Fig. 7 is a diagram illustrating the results of X-ray diffraction of the thin ITO film with the Sn concentration in the thin film as a parameter. The diffraction peak positions of the thin ITO films that are measured are all in agreement with the diffraction peak (JCPDS card, No. 06-0416) of an indium oxide ($In_2O_3$) powder of a standard sample within a limit of error irrespective of the Sn concentrations in the thin films. The orientation planes corresponding to the diffraction peaks are polycrystalline thin ITO films of a bixbyte crystalline structure belonging to a cubic system, which are stable under normal pressure and exhibit (211), (222), (400), (411), (510), (440) and (622). These results are in agreement with the results obtained by Sawada et al. ({2}) . In the thin ITO film formed by the conventional DC sputtering method, an orientation plane having the greatest diffraction peak is (200) which is a sole difference from the thin ITO film formed by the spray method of the embodiment of the present invention. However, the thin ITO film of the embodiment of the present invention has a main peak intensity on the orientation surface (400) which is about 10 folds greater than other peak intensities, from which it will be learned that the thin polycrystalline ITO film of the present invention has good orientation property.

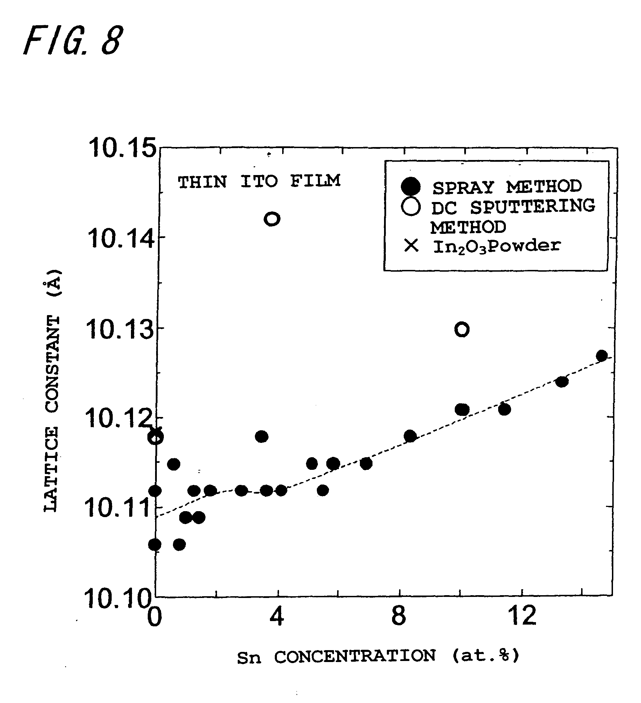

Fig. 8 is a diagram illustrating a relationship between the Sn concentration in the thin ITO film and the lattice constant thereof. The lattice constant is calculated from the orientation plane (622) of a maximum diffraction angle $2\theta$ = 60.67. From Fig. 8, when the Sn concentration is zero, the lattice constant is a = 10.110 Å which is close to the lattice constant (a = 10.117 Å) of the standard $In_2O_3$ powder. Accompanying an increase in the Sn concentration, the lattice constant of the thin ITO film formed by the spray method of the embodiment of the invention increases in proportion thereto in near agreement with the results of Sawada et al ({2}). This can be similarly considered as the expansion of the lattice due to coulomb repulsive force to $In^{3+}$ ions surrounding $Sn^{4+}$ ions generated by the substitution of $Sn^{4+}$ for the $In^{3+}$ site in the DC-sputtered thin ITO film, that has heretofore been pointed out. Open circles in the drawing represent values of a thin high-performance ITO film formed by the DC sputtering and measured by the present inventor, and are assuming large values due to a larger expansion of the lattice than the lattice constant of the thin ITO film formed by the spray method of the embodiment of the invention.

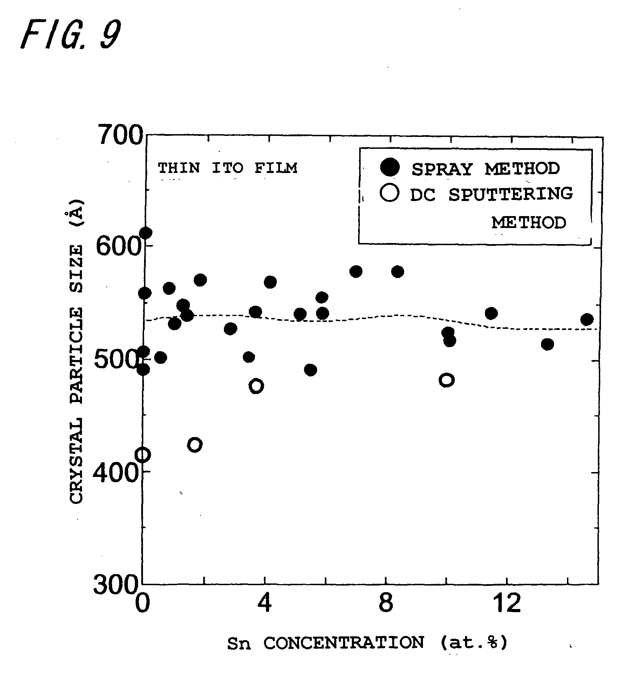

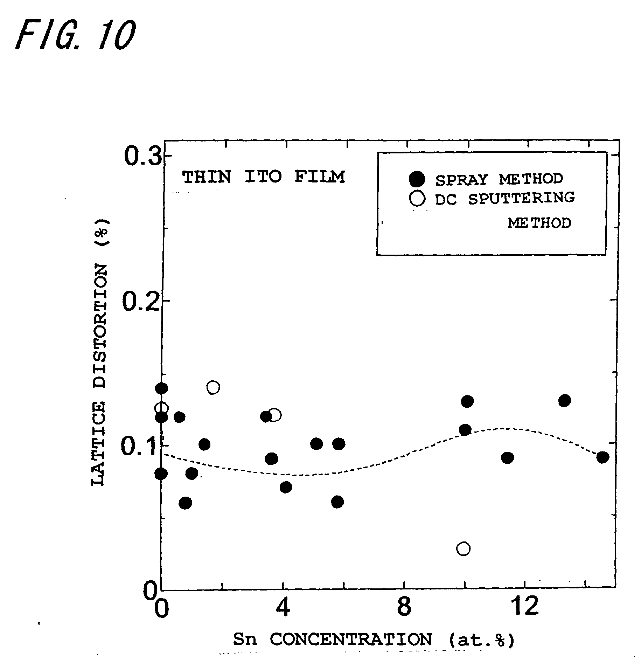

Fig. 9 is a diagram illustrating a relationship between the Sn concentration in the thin ITO film and the crystal particle size thereof in the direction of thickness of the film. Likewise, Fig. 10 is a diagram illustrating a relationship between the Sn concentration and the lattice distortion thereof. The crystal particle size ($\epsilon$/Å) and the lattice distortion ($\eta$) are found by finding an integrated width ($\beta$ /rad) of peaks of refracted rays shown in Fig. 7 and by applying it to the following formula ($\Theta$ is an angle of diffraction),

$$\frac{\beta^2}{\tan^2\theta} = \frac{1}{\epsilon}\frac{\lambda\beta_i}{\tan\theta\,\sin\theta} + 16\,\eta^2 \qquad (10)$$

According to Fig. 9, the liquid crystal particles are confined in a range of 500 to 570Å over the whole region of Sn concentrations. These values are greater than the crystal particle sizes of 410 to 480Å of the DC-sputtered film measured by the present inventor, proving that the thin ITO film of the present invention has excellent crystallinity. In Fig. 10, the values of lattice distortion are dispersing, which, however, are still smaller than the values of the DC-sputtered film (at a substrate temperature of 400°C) measured by the present inventor. This proves that the thin ITO film of the invention is of a good quality having a small lattice distortion despite the substrate temperature of the sprayed film is as relatively low as 350°C.

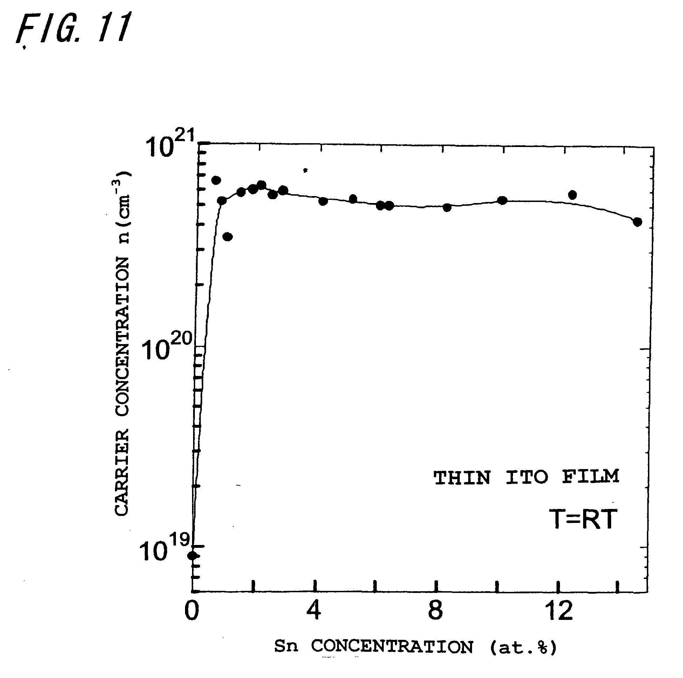

Fig. 11 is a diagram illustrating a relationship between the Sn concentration in the thin ITO film and the carrier concentration n therein. From the polarity of the Hall voltage of the thin ITO film, the carriers are the electrons and their concentration n is calculated from the formula (4). So far, no report is covering the carrier concentration n of the thin ITO film of a low Sn concentration of Sn $\fallingdotseq$ 4 atomic % or lower. As shown in Fig. 11, however, it was discovered that a large value n = 6.6 x $10^{20}$ cm$^{-3}$ is exhibited at Sn = 0.6 atomic %. Thus, constant values nearly in agreement with Sawada et al.'s values ({2}) are exhibited lying in a range of n = 5 to 6 x $10^{20}$ cm$^{-3}$ up to a high concentration side, i.e., up to Sn = 1.3 to 14.6 atomic %. This experimental fact indicates that a thin ITO film having a carrier concentration that can be put into practice is produced by the addition (doping) of tin of an amount of as small as 0.6 atomic %, and offers a knowledge which is very important from the practical point of view.

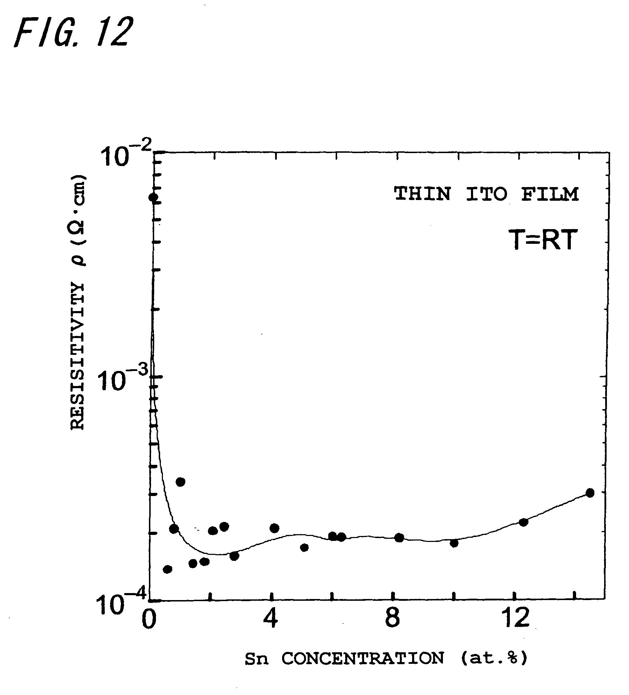

Fig. 12 is a diagram illustrating a relationship between the Sn concentration in the thin ITO film and the resistivity $\rho$ calculated from the formula (2). So far, like in the case of the carrier concentration n, no report is covering the resistivity $\rho$ of the thin ITO film of a low Sn concentration of Sn $\fallingdotseq$ 4 atomic % or lower. As shown in Fig. 12, however, there was found a small value of $\rho \fallingdotseq$ 1.7 x $10^{-4}$ $\Omega \cdot$ cm which practically pertains to a category of a high-performance thin ITO film even by the doping with tin of a small amount of 0.6 atomic %. Nearly the same value $\rho \fallingdotseq$ 1. 7 x $10^{-4}$ $\Omega \cdot$ cm is exhibited even at Sn = 1.3 to 2.8 atomic %. In a range of higher concentrations Sn = 4 to 14.6 atomic %, there are exhibited $\rho$-values lying in a range of $\rho \fallingdotseq$ 1.7 to 3.0 x $10^{-4}$ $\Omega \cdot$ cm which are smaller than, and superior to, the values ($\rho \fallingdotseq$ 2 to 5.5 $\times$ $10^{-4}$ $\Omega \cdot$ cm) ({2}) of Sawada et al.

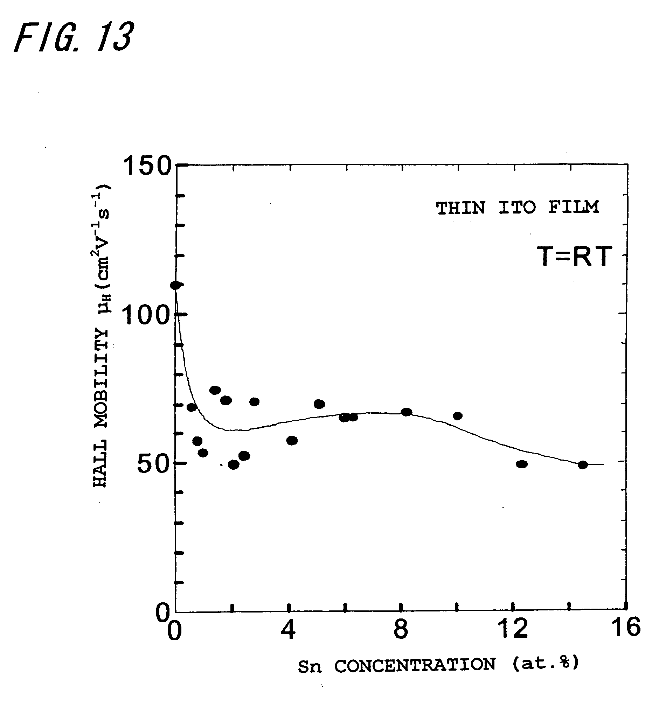

Fig. 13 is a diagram illustrating a relationship between the Sn concentration in the thin ITO film and the Hall mobility $\mu_H$ therein. The Hall mobility $\mu_H$ of the ordinate calculated from the formula (5) is the one for the electrons. Like in the case of the above carrier concentration n and the resistivity $\rho$, no report is covering the Hall mobility of the thin ITO film of a low Sn concentration of Sn $\fallingdotseq$ 4 atomic % or lower. As shown in Fig. 13, however, there was found a value of $\mu_H \fallingdotseq$ 65 cm$^2$/vs at Sn = 0.6 atomic %. An average value of $\mu_H \fallingdotseq$ 65 cm$^2$/vs is exhibited at Sn = 1.3 to 2.8 atomic %, and the value decreases from $\mu_H \fallingdotseq$ 67 cm$^2$/vs down to 50 cm$^2$/vs at a higher concentration region of Sn = 4 to 14.6 atomic %. The values $\mu_H$ in the high-concentration region are greater than the values $\mu_H \fallingdotseq$ 25 to 42 cm$^2$/vs of Sawada et al. and indicate that the electrons are allowed to move easily. This proves that the thin ITO film of the embodiment of the invention features high performance lowering the effect of scattering the carriers (electrons).

In effect, if the experimental results of carrier concentration, resistivity and Hall mobility characterizing the electric properties are summarized, the thin ITO film of this embodiment just realizes the requirement of (b) how to decrease the electron scattering effect which causes an increase in the resistivity, which was described earlier.

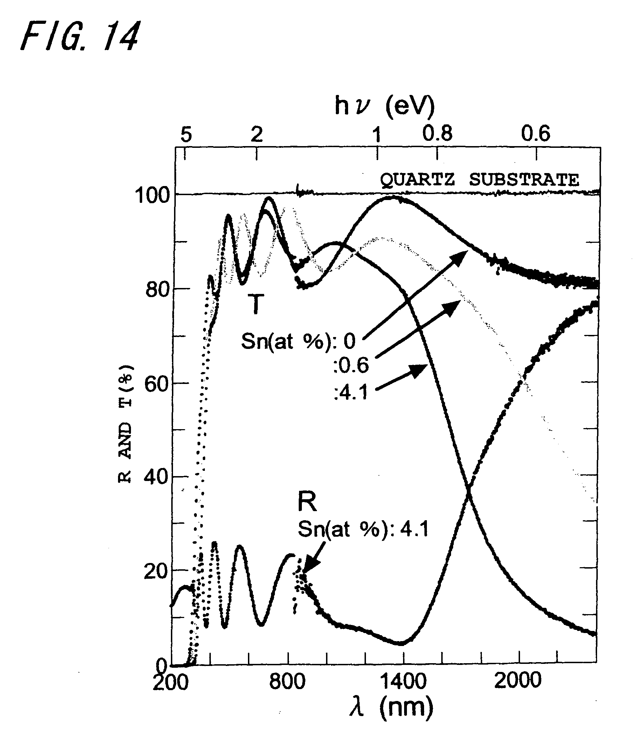

Fig. 14 is a diagram illustrating the measured results of the transmittances T and the reflectances R of the thin ITO films (Sn = 0, 0.6, 4.1 atomic %) relative to the wavelength $\lambda$ (nm) of the scanning monochromatic light of a spectrophotometer. Fig. 14 also shows the measured data (T = 100%) of the thin ITO films relative to the quartz substrate. As for the reflectance, the measured result of the thin ITO film at Sn = 4.1 atomic % only is shown for easy comprehension of the features preventing the overlapping of curves. In Fig. 14, the values of T and R are oscillating relative to $\lambda$ being caused by the interference of light between the surface of the thin film and the substrate. Not being limited to the thin ITO film samples, this is a phenomenon that usually appears in the measurement of transmittances/reflectances of semiconductor thin film samples. It will be learned from Fig. 14 that the decrease of the transmittance and the increase of the reflectance shift toward the short wavelength side as the Sn concentration increases.

Next, the absorption coefficient $\alpha$ is found by substituting average values of vibration curves of T and R for the formula (7). In Fig. 14, the average transmittance T is 87% at wavelengths $\lambda \fallingdotseq$ 400 to 1000 nm of from the visible region to the near infrared region, and is superior to an average value T = 83% of Sawada et al . ({2}). The thin ITO film of Sn = 4.1 atomic % exhibits a decrease in the transmittance and a sharp increase in the reflectance from about $\lambda \fallingdotseq$ 1400 nm presumably due to the reflection of light by plasma oscillation of conductive electrons in the thin ITO film as has heretofore been pointed out.

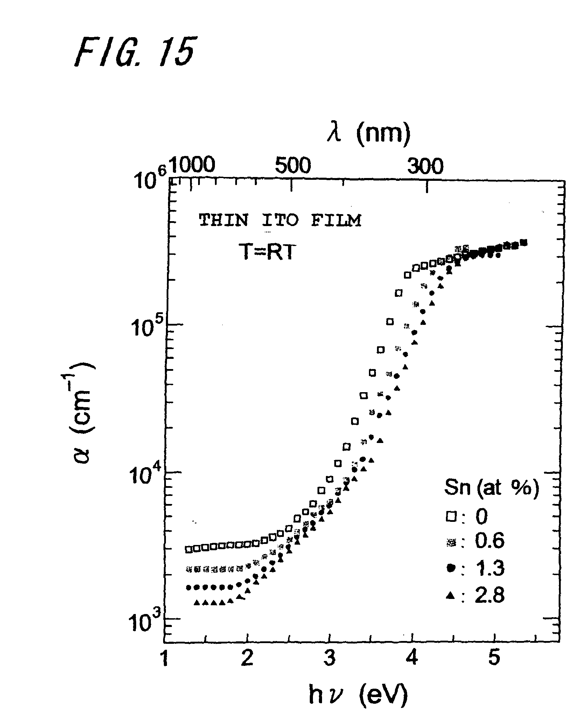

Fig. 15 is a diagram showing the measured results of absorption spectra of the thin ITO film samples of low Sn concentrations (0, 0.6, 1.3, 2.8 atomic %). The conventional study has chiefly dealt with the absorption spectra over a wavelength range of from the ultraviolet region to the visible region having monochromatic light wavelengths of $\lambda \fallingdotseq$ 250 to 400 nm in order to examine the light absorption end (related to the size of the band gap) of the thin ITO film. Therefore, Fig. 15 shows the measured results of novel absorption spectra that have not been known so far.

On the short wavelength side ($\lambda \fallingdotseq$ 310 to 360 nm) of the monochromatic light wavelengths in Fig. 15, the data points of absorption coefficients $\alpha$ of all samples are in good agreement with straight lines representing an inter-band transition toward the band end of the exponential function type. The linear portions are shifting toward the short wavelength side (in which the photon energy h$\nu$ increases) with an increase in the Sn concentration. This indicates that the absorption end (band gap) is increasing (Burstein-Moss effect). On the long wavelength side ($\lambda \fallingdotseq$ 340 to 1000 nm), therefore, the data points of $\alpha$ deviate from the straight lines as the wavelength increases. This shows the features of the light absorption properties via the lattice defect ({6, 8}) . At $\lambda \fallingdotseq$ 500 to 1000 nm, further, it was discovered for the first time that when the Sn concentration increases from 0 to 2.8 atomic %, the absorption coefficient $\alpha$ proportionally decreases while approaching a predetermined value.

The decrease in the absorption coefficient $\alpha$ realizes, for the first time, the requirement (a) of how to decrease the light absorption effect in the long wavelength region, which was described earlier. The method of producing the thin ITO film of a low Sn concentration of the embodiment provides an important technological method of producing thin ITO films of high performance at a low cost on an industrial scale.

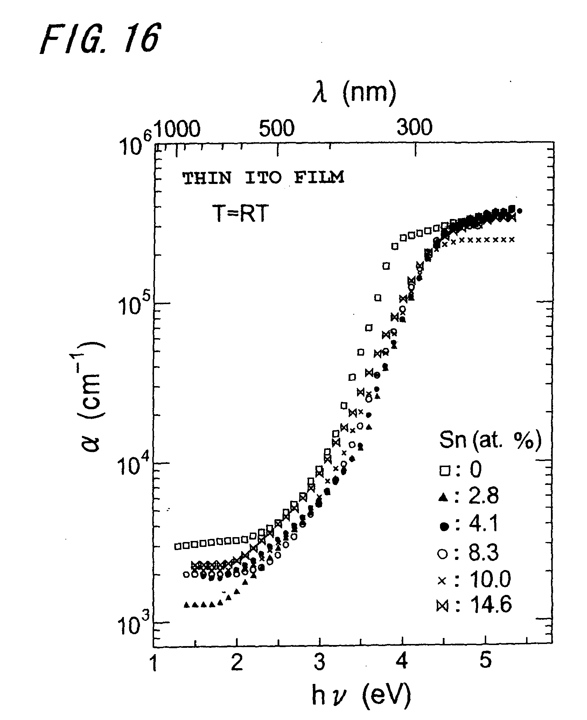

Fig. 16 is a diagram showing the measured results of absorption spectra of the thin ITO film samples of high Sn concentrations (4.1, 8.3, 10.0, 14.6 atomic %). Fig. 16 also shows the measured data of the samples of Sn = 0 and 2.8 atomic %. From Fig. 16, there are observed straight portions of absorption coefficients $\alpha$ representing the absorption ends of the short wavelength regions, portions where the absorption coefficients $\alpha$ are deviated in the long wavelength region and portions of constant values like in the case of Fig. 15. In the portions of constant absorption coefficients $\alpha$, however, the values increase from $\alpha \fallingdotseq 1.3 \times 10^3$ cm$^{-1}$ to $2.3 \times 10^3$ cm$^{-1}$ as the Sn concentration increases from 2.8 atomic % to 4.1, 8.3, 10.0 and 14.6 atomic %. Here, $\alpha \fallingdotseq 1.3 \times 10^3$ cm$^{-1}$ at Sn = 2.8 atomic % is giving a minimum value in the portion where the absorption coefficients $\alpha$ remain constant. This fact was discovered for the first time as a concrete "decreasing method" for realizing the requirement (a) of how to decrease the light absorption effect in the long wavelength region, which was described earlier. The method of producing the thin ITO film of a low Sn concentration of the embodiment provides an important technological method of producing thin ITO films of high performance at a low cost on an industrial scale.

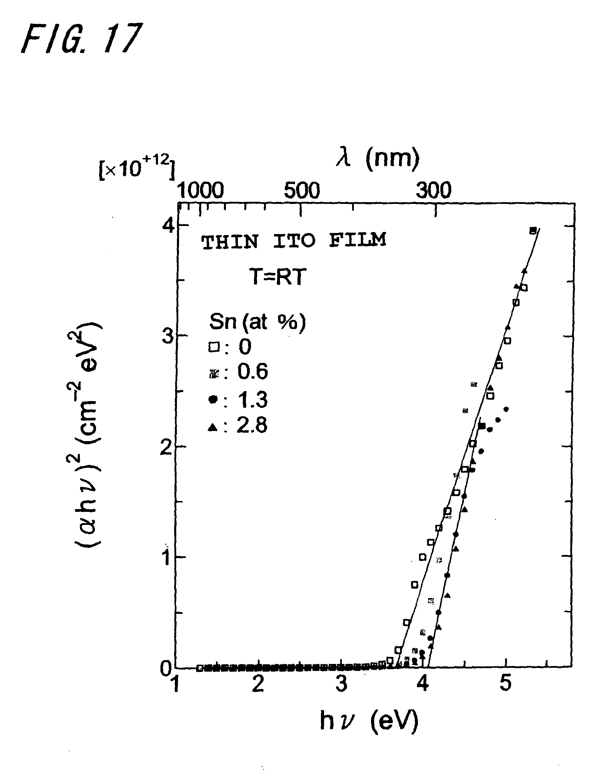

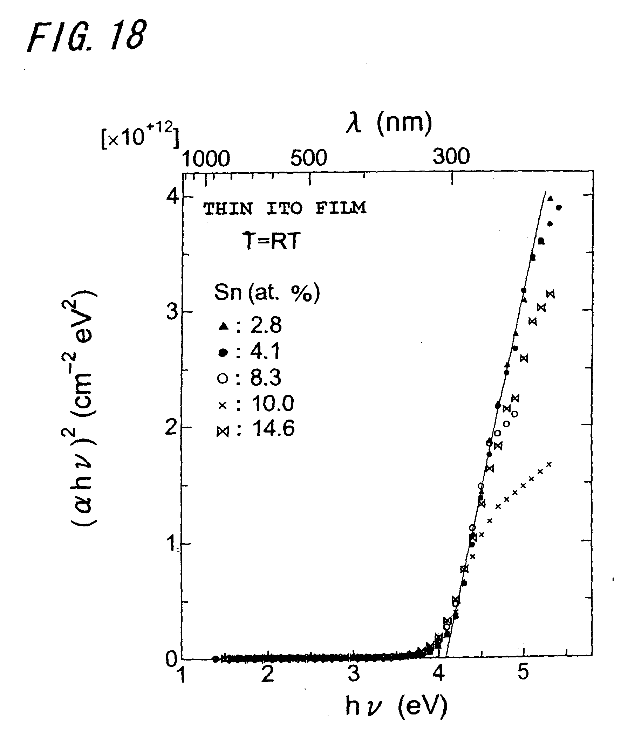

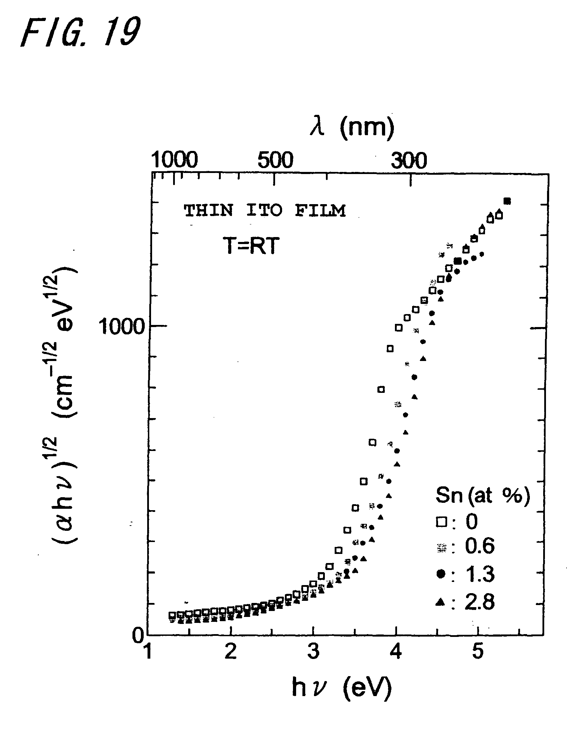

Figs. 17, 18, 19 and 20 are diagrams of when absorption coefficients $\alpha$ for wavelengths $\lambda$ (photon energy h$\nu$) shown by the measured results of absorption spectra (Figs. 15 and 16) are substituted for the formula (8), and the calculated results ($\alpha$h$\nu$) 1/n are shown relative to the wavelengths $\lambda$ (photon energy h$\nu$). Here, however, Figs. 17 and 18 show the calculated results for the direct allowed transition step (transition of electrons from the valency electron band at an electron wave number of k = 0 to the bottom of the conduction band) in the inter-band transition of when n = 1/2. In Figs. 17 and 18, the calculated values ($\alpha$h$\nu$) $^2$ of when n = 1/2 are in good agreement with the straight lines, from which it will be learned that the thin ITO films of this embodiment are all in compliance with the direct allowed transition step. Further, the straight line is extrapolated at ($\alpha$h$\nu$)$^2$ = 0, and a value h$\nu$ at a point traversing the abscissa gives a band gap value Eg. In Fig. 19, the In$_2$O$_3$ sample of Sn = 0 gives Eg = 3.6 eV and the thin ITO film sample of a low Sn concentration of 2.8 atomic % gives Eg = 4.1 eV. The samples of high Sn concentrations of Fig. 18 give Eg = 4.1 eV which is nearly in agreement with a value that has been reported thus far ({3}).

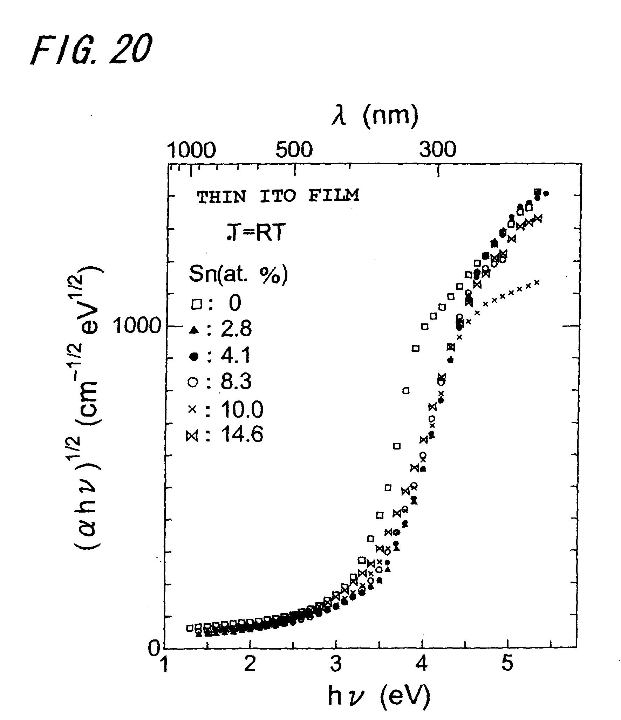

Figs. 19 and 20 show the calculated values $(\alpha h\nu)^{1/2}$ for the indirect transition step (transition of electrons from the valency electron band deviated from k = 0 to the bottom of the conduction band) of when n = 2. In these drawings, the calculated values describe curves deviated from the straight lines, from which it will be understood that none of the thin ITO films comply with the indirect transition step.

In effect, from the analysis of the absorption spectra, the step of optical absorption of all samples inclusive of thin ITO films of low Sn concentrations is explained by the step of inter-band direct allowed transition step. This is the same as the case of the thin ITO films formed by the conventional DC sputtering.

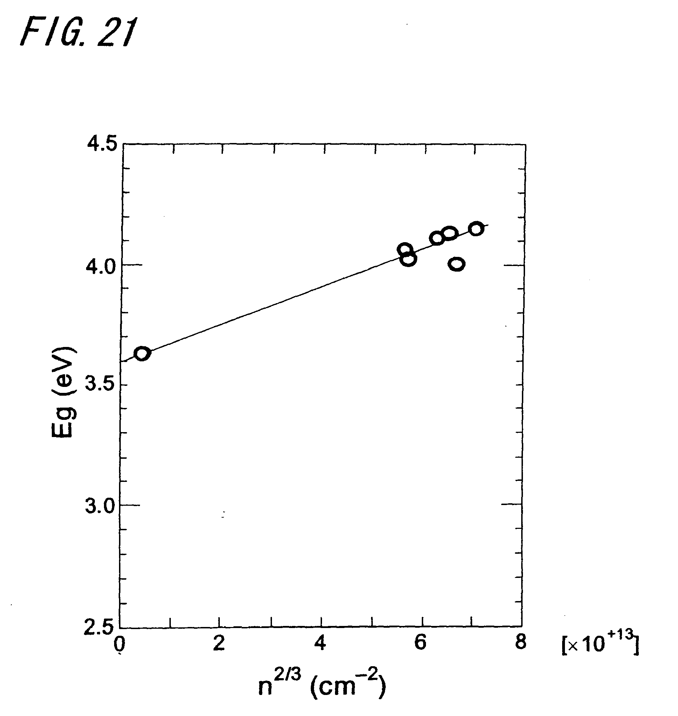

Fig. 21 is a graph illustrating a shift of an absorption end toward a short wavelength region due to the Burstein-Moss effect in an easy-to-understand manner, wherein the ordinate represents the band gap Eg found in Figs. 17 and 18 and the abscissa represents $n^{2/3}$ of the electron concentration n shown in Fig. 11. A relationship between Eg and $n^{2/3}$ is given by the following formula which expresses Fermi energy in the case of a free electron model of a metal (this is because a thin ITO film assumes an electronic state resembling that of a metal in a so-called degenerated state where electrons are filling the bottom of the conduction band and the Fermi energy is entering into the conduction band),

$$Eg - Ego = \frac{h^2}{2m_B}(3\pi^2 n)^{2/3} \qquad (11)$$

where $Eg_0$ is a band gap in a state that has not been degenerated, h is the Planck's constant, $m_B$ is a converted mass of an electron and is given as $(1/m_B = (1/m_c) + (1/m_v)$, $m_c$ is an effective mass of the conduction band, and $m_v$ is an effective mass of the valence electron band.

From Fig. 21, there are obtained the values $Eg_0$ = 3.6 eV and $m_B$ = 0.45 $m_0$ ($m_0$ is a rest mass of an electron). The former value is smaller by about 3% and the latter value is smaller by about 10% than the values of a sputtered thin ITO film that has heretofore been well known.

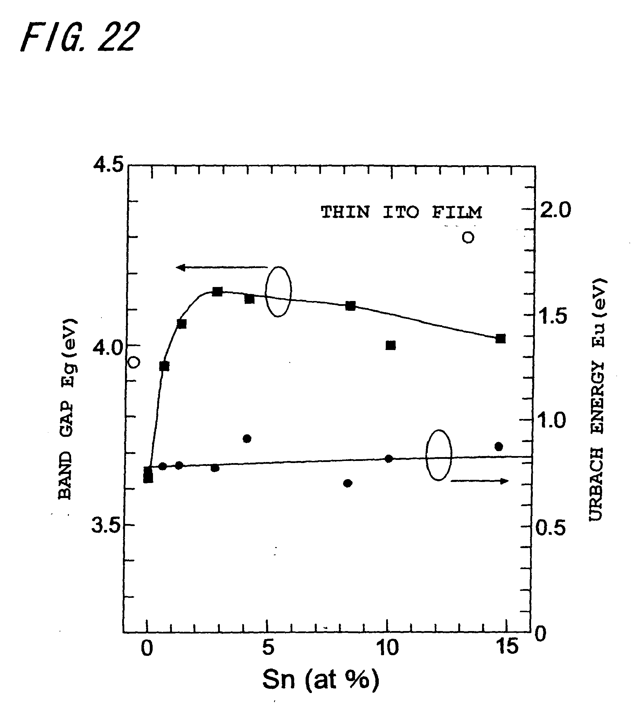

Fig. 22 is a diagram plotting the band gaps Eg relative to the Sn concentration in the thin ITO film and the values of Urbach energy Eu representing disturbance of state density at the bottom of the conduction band, wherein Eg is a value found in Figs. 17 and 18. The value Eu is calculated by using the formula,

$$\alpha = \alpha_0 \exp(h\nu/E_u) \qquad (12)$$

where $\alpha_0$ is a constant, of the absorption coefficient for the inter-band transition having a band end of the exponential function type often used in semiconductor physics and by using the measured data of absorption spectra (Figs. 15 and 16). From Fig. 22, the band gap Eg increases from Sn = 0 up to 4.1 atomic % and, thereafter, decreases with an increase in the concentration passing through a maximum value of Eg = 4.13 eV. The Urbach energy Eu is not much dependent upon the Sn concentration and remains nearly constant, i.e., Eu = 0.83 eV. In general, the Urbach energy Eu is a physical quantity measured in semiconductor polycrystals and amorphous silicon, and stems from such defects as dislocation, point defect, crystal grain boundary, and asymmetrical electrons (dangling bond) or lattice distortion due to impurities. So far as the present inventor knows, this invention has dealt, for the first time, with the value of Urbach energy Eu for the thin ITO film formed by the spray method, and its entity is still under consideration. However, the value of Urbach energy Eu plays an important role for generally comprehending the absorption properties (Figs. 15 and 16) of the thin ITO films of low Sn concentrations in the long wavelength region ($\lambda \fallingdotseq$ 500 to 1000 nm).

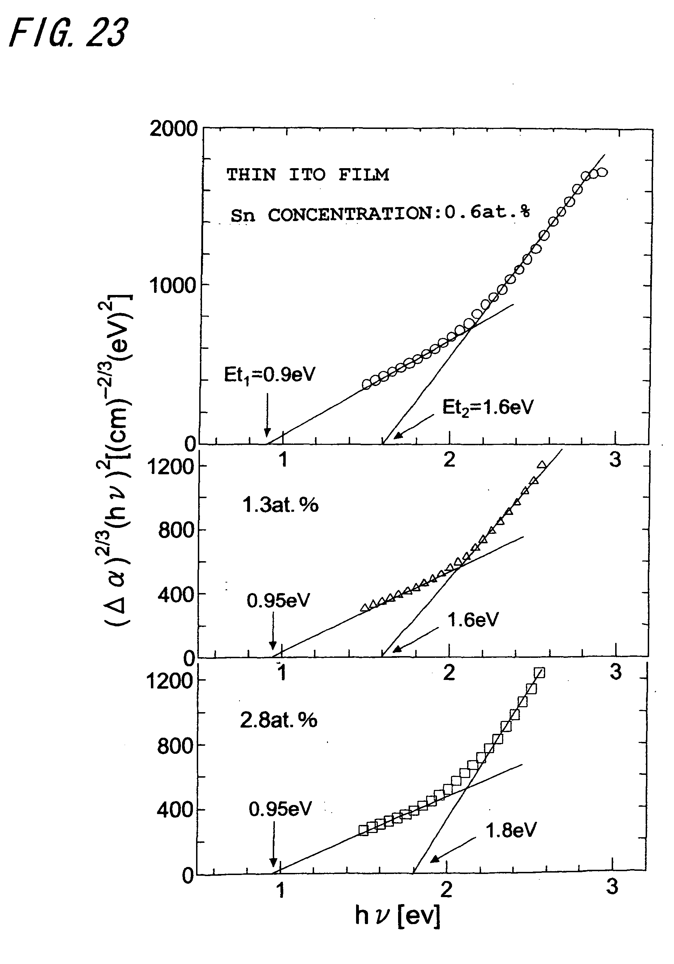

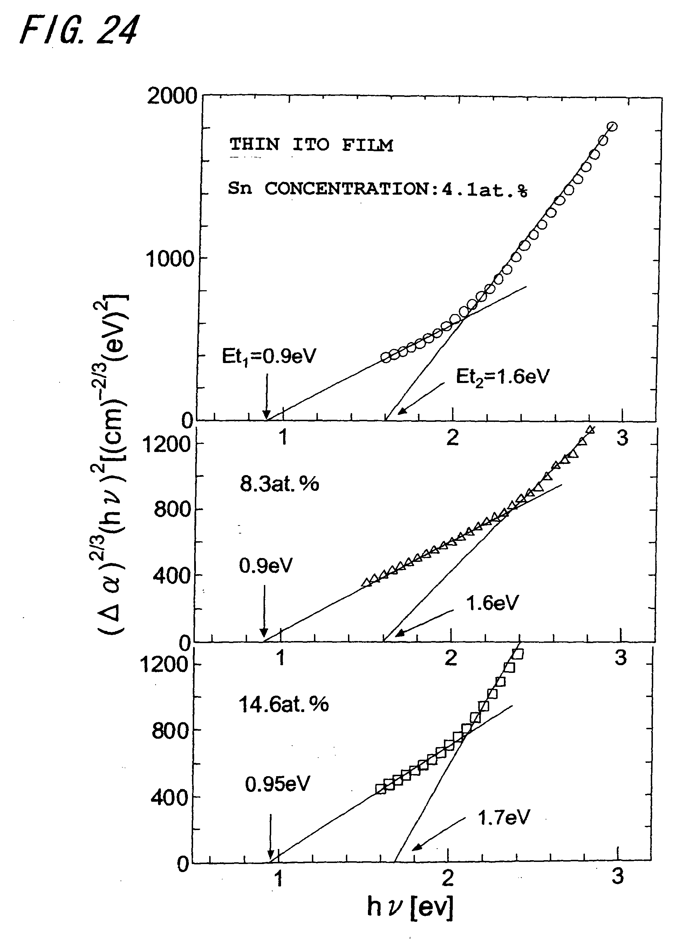

Figs. 23 and 24 are graphs of the Lucovsky plot using the formula (9), wherein the abscissa represents the photon energy $h\nu$ and the ordinate represents a value $(\Delta\alpha)^{2/3}(h\nu)^2$ calculated by substituting f = 3/2 of Table 1 and $\alpha$-values of Figs. 15 and 16 for the formula (9). In Figs. 23 and 24, the calculated values are in good agreement with two straight lines from the visible region up to the near infrared region of from $h\nu$ = 2.8 eV ($\lambda$ = 430 nm) up to $h\nu$ = 1.24 eV ($\lambda$ = 1000 nm). This proves that the absorption properties of the thin ITO films are complying with the Lucovsky model. Therefore, the values $h\nu$ at points where the straight lines traverse the abscissa in these drawings give positions of localized levels accompanying the lattice defect that characterizes the absorption properties, i.e., give threshold energies Et of the formula (9).

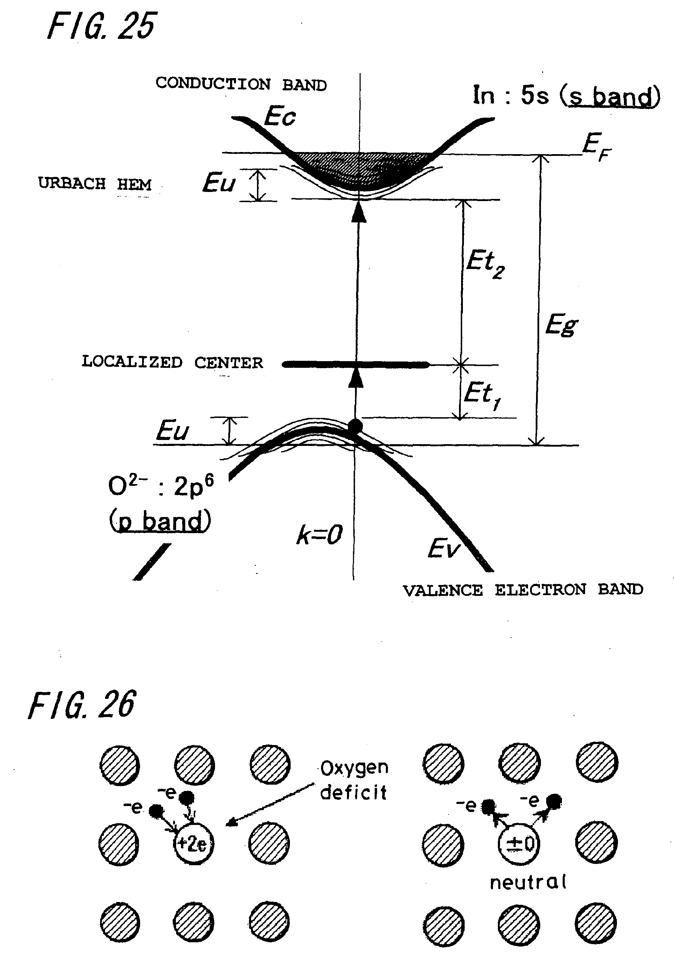

The absorption transition step is an inter-band direct allowed transition step at an electron wave number of k = 0 via the localized center (Fig. 25). If described in further detail, this is the transition step in which the electrons in the Urbach hem in the valence electron band that has acquired the photon energy by the irradiation with light of a long wavelength are excited to a localized level positioned at an energy higher by $Et_1$ and the electrons on the localized level that has acquired a larger photon energy by the irradiation with light of a short wavelength are excited to the Urbach hem in the conduction band positioned at an energy higher by $Et_2$. From the values measured thus far, this can be proved as described below.

That is, the band gap Eg becomes $Eg = Et_1 + Et_2 + 2Eu = 0.9 + 1.6 + 2 \times 0.82 = 4.14$ (eV) which is just in agreement with the maximum band gap $Eg \fallingdotseq 4.14$ (eV) that was measured as shown in Fig. 22. As described above in the embodiment, this fact proves that the present invention has succeeded in producing a thin high-performance ITO film of a low Sn concentration based on the spray method and, besides, the optical properties and electric properties were measured maintaining high precision, high reliability and good reproduceability. Finally, described below are the entities of localized levels having threshold energies $Et_1$ and $Et_2$ that were not described above.

Fig. 26 is a diagram schematically illustrating the crystal structure of a thin ITO film of a low Sn concentration. The thin ITO film formed by the DC sputtering, usually, contains lattice defects such as oxygen deficit, atomic hole, void and dislocation in addition to constituent atoms that form a crystal structure and, particularly, the thin ITO film contains oxygen complexes formed by complex entanglement of oxygen atoms with ions such as $In^{3+}$, $Sn^{4+}$, Sn atoms that have infiltrated into the lattice, and In atoms and Sn atoms. Here, based on the fact that the oxygen deficit in the sputtered thin ITO film dominates the optical absorption properties in the long wavelength region ([1]) clarified already by the present inventor, it is likewise presumed that the principal lattice defect is the oxygen deficit dominating the light absorption property of the thin ITO film of a low Sn concentration in the long wavelength region ($\lambda \fallingdotseq 500$ to 1000 nm).

Propriety of assuming the oxygen deficit is proved as described below from the analytical results based on the Lucovsky model. That is, the entity of the localized levels is clarified as described below from the fact that the energy values ($Et_1$ and $Et_2$) of localized levels of Fig. 25 are discovered by the analysis of the measured results with the f-value of Table 1 as $f = 3/2$. According to Table 1, the transition step of the case of $f = 3/2$ is (1) the one in which the electrons are transited to the trapping center (having a linear band state density concerning the localized level) having an electric charge to where the electrons in the valence electron band will be transited. Another transition step is (2) the one in which the electrons are transited to the band (having a parabolic state density) from the neutral trapping center. In a dark state without being irradiated with monochromatic light, the oxygen deficits in the thin ITO film have been charged to +2e, the electrons in the valence electron band easily move gaining energy $Et_1$ by the irradiation with monochromatic light and are trapped by the oxygen deficits charged to +2e to neutralize the oxygen deficits. This corresponds to the electron transition step (1) for the energy difference $Et_1$ in Fig. 25. In the oxygen deficit in the neutral state that has trapped the electron, the electron in the neutral state that has acquired a larger photon energy is excited to the Urbach hem in the conduction band positioned at a higher energy due to the irradiation with monochromatic light of a short wavelength. This corresponds to the electron transition step (2) for the energy difference $Et_2$ in Fig. 25.

In effect, the entity of the localized level is the oxygen deficit. As a result, it can be concluded that the light absorption properties that accompany a decrease in the absorption coefficients of the thin ITO films of low Sn concentrations in Figs. 15 and 16 discovered in the long wavelength region ($\lambda \fallingdotseq 500$ to 1000 nm) are those taking place in the electron transition step via the localized level that stems from the oxygen deficit.

Further, if a control technology for decreasing the amount of oxygen deficit is invented, then, a thin ITO film having higher performance can be produced. This should be the problem that is to be solved in the future.

As described above in the embodiment of the present invention, the thin ITO films of low Sn concentrations (0.6, 1.3, 2.8 atomic %) were produced for the first time, and the novel experimental facts obtained from the measurement of electric properties and optical properties thereof offer the effects of the invention as described below.

(a) The resistivities $\rho \fallingdotseq 1.7 \times 10^{-4}$ $\Omega\cdot$cm of the thin ITO films having low Sn concentrations (0.6, 1.3, 2.8 atomic %) (Fig. 12) are smaller than the resistivities $\rho \fallingdotseq 1.9$ to $3.0 \times 10^{-4}$ $\Omega\cdot$cm of the thin ITO films of high Sn concentrations (4.1, 8.3, 10.0, 14.6 atomic %) and, hence, decreasing the Sn concentration in the thin ITO films is effective in solving the problem of the present invention of decreasing the resistivity. A decrease in the resistivity is proved by a decrease in the electron scattering effect in the thin ITO film that is supported by the experimental observation of a large Hall mobility shown in Fig. 13.

(b) Light absorption properties of thin ITO films of low Sn concentrations (0.6, 1.3, 2.8 atomic %) (Figs. 15 and 16) are effective in solving the problem of the invention which is to greatly decrease the absorption coefficient in the long wavelength region ($\lambda \fallingdotseq 500$ to 1000 nm) . As shown in Figs. 15 and 16, the thin ITO film usually exhibits a large absorption coefficient in the short wavelength region (a color of blue or violet) of wavelengths of shorter than about 420 nm and absorbs light well. Therefore, the thin ITO film is colored in yellow with an increase in the film thickness and poorly transmits light in the visible region ($\lambda = 380$ to 780 nm) . Similarly, as the absorption coefficient increases in the long wavelength region of wavelengths of $\lambda \fallingdotseq 500$ to 1000 nm (colors of bluish green, green, yellowish green, yellow, orange and red), the light transmission of the thin ITO film is deteriorated in the visible region which is most important in practice. Therefore, a decrease in the absorption coefficient in the long wavelength region found by the present inventor is realized by the production of thin high-performance ITO films of low Sn concentrations (0.6, 1.3, 2.8 atomic %) having high light transmittances in the visible region. This makes it possible to produce thin high-performance ITO films, which is a very important advantage from the industrial point of view meeting the technical demand that was described earlier.

(c) The production of the thin high-performance ITO films having low Sn concentrations (0.6, 1.3, 2.8 atomic %) is in line with saving resources of expensive metal materials, i.e., decreasing the amount of Sn addition in the sputtering target (Sn concentration of 4 atomic % in many cases) that is much used in the production of thin ITO films as is now being practically used.

(d) The method of producing thin ITO films by the spray method using a solution obtained by diluting $InCl_3 \cdot 3.5H_2O$ and $SnCl_2$ $2H_2O$ with ethanol of the embodiment of the invention offers an advantage of producing thin films in the atmosphere, a simple production method and a low facility cost, and makes it possible to produce thin ITO films of low Sn concentrations (0.6, 1.3, 2.8 atomic %) having large areas and high performance on an industrial scale as compared to the conventional production methods based on spraying (based on two-step heating system of preheating the spray in a tubular electric furnace and heating the substrate).

Here, it should be noted that the invention is in no way limited to the above-mentioned embodiment of the invention only but may be carried out in a variety of other ways without departing from the gist of the invention.

**Claims**

1. A thin ITO film formed on a substrate and having an Sn concentration of 0.6 to 2.8 atomic % and exhibiting an absorption coefficient $\alpha$ of not larger than $2.0 \times 10^3$ cm$^{-1}$ for the monochromatic light of a wavelength of 800 nm.

2. A thin ITO film according to claim 1, wherein the thin ITO film is a transparent electrically conducting film.

3. A method of producing a thin ITO film comprising a step of heating a substrate left in the atmosphere and spraying a mixed solution of an indium salt and a tin salt onto the substrate, wherein the Sn concentration in the thin ITO film is 0.6 to 2.8 atomic %.

4. A method of producing a thin ITO film according to claim 3, wherein the tin salt is a stannous chloride.

5. A method of producing a thin ITO film according to claim 3, wherein the solution is an alcohol solution.

FIG. 1

# FIG. 2

2mm

5mm

MAGNETIC FIELD B

CURRENT Is

HALL VOLTAGE V$_H$

Vs

V$_H$

## FIG. 3

CONDUCTION BAND

$E_F$

DIRECT ALLOWED TRANSITION

INDIRECT TRANSITION

$E_{g0}$

$E_g$

VALENCE ELECTRON BAND

$k = 0$

## FIG. 4

## FIG. 5

## FIG. 6

## FIG. 7

## FIG. 8

## FIG. 9

## FIG. 10

*FIG. 11*

THIN ITO FILM

T=RT

CARRIER CONCENTRATION $n\,(cm^{-3})$

Sn CONCENTRATION (at.%)

# FIG. 12

*FIG. 13*

# FIG. 14

## FIG. 15

## FIG. 16

FIG. 17

## FIG. 18

*FIG. 19*

*FIG. 20*

## FIG. 21

## FIG. 22

## FIG. 23

## FIG. 24

## FIG. 25

## FIG. 26

**INTERNATIONAL SEARCH REPORT**

| | International application No. |
|---|---|
| | PCT/JP2004/012710 |

| A. CLASSIFICATION OF SUBJECT MATTER |
|---|
| Int.Cl$^7$ C01G15/00, C01G19/00, H01B5/14, H01B13/00 |

According to International Patent Classification (IPC) or to both national classification and IPC

| B. FIELDS SEARCHED |
|---|
| Minimum documentation searched (classification system followed by classification symbols) |
| Int.Cl$^7$ C01G1/00-57/00, H01B5/14, H01B13/00 |

Documentation searched other than minimum documentation to the extent that such documents are included in the fields searched

| Jitsuyo Shinan Koho | 1922-1996 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)
CA(STN)

| C. DOCUMENTS CONSIDERED TO BE RELEVANT |
|---|

| Category* | Citation of document, with indication, where appropriate, of the relevant passages | Relevant to claim No. |
|---|---|---|
| A | H.Kostlin, R.Jost, and W.Lems, Optical and Electrical Properties of Doped In$_2$O$_3$ Films, Phys.stat.sol. 1975, Vol.(a)29, No.87, pages 87 to 93 | 1-5 |
| A | Y.Sawada, C.Kobayashi, S.Seki and H.Funakubo, Highly-conducting indiumu-tin-oxide trasparent films fabricated by spray CVD using ethanol solution of indium (III) chloride and tin (II) chloride, Thin Solid Films, 2002, Vol.409, pages 46 to 50 | 1-5 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 November, 2004 (16.11.04) | 30 November, 2004 (30.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)